# EUROPÄISCHE PATENTSCHRIFT

(11) **EP 2 930 219 B1**
(45) Veröffentlichungstag und Bekanntmachung des Hinweises auf die Patenterteilung: **26.12.2018**
(21) Anmeldenummer: 15155595.0
(22) Anmeldetag: 18.02.2015
(51) Int. Cl.: C09J 5/02, C09J 7/50, B32B 7/12

(54) **Reaktive Klebstoffsysteme und deren Verwendung**
Reactive adhesive systems and their use
Système d'adhésif réactif et son utilisation

(30) Priorität: 11.04.2014 DE 102014105213; 30.05.2014 DE 102014107653; 20.06.2014 DE 102014108671
(43) Veröffentlichungstag der Anmeldung: 14.10.2015
(73) Patentinhaber: Jowat AG, 32758 Detmold (DE)
(72) Erfinder: Louven, Johannes Wilhelm, Dr., 32805 Horn-Bad Meinberg (DE); Terfloth, Christian, Dr., 32760 Detmold (DE)
(74) Vertreter: Von Rohr Patentanwälte Partnerschaft mbB

(56) Entgegenhaltungen:
- WO-A2-2006/008251
- WO-A2-2013/049095
- DE-A1- 19 924 139
- GB-A- 954 863
- US-A1- 2003 084 995
- US-A1- 2010 059 179

## Beschreibung

Die vorliegende Erfindung betrifft reaktive Klebstoffsysteme sowie ihre Verwendung, insbesondere in industriellen Anwendungen.

Insbesondere betrifft die vorliegende Erfindung ein Verfahren zum Fügen von mindestens zwei Werkstücken (Fügeteilen) durch Kleben mittels eines Klebstoffs sowie die auf diese Weise erhältlichen Verbundwerkstücke.

Darüber hinaus betrifft die vorliegende Erfindung die Verwendung einer Lösung bzw. Dispersion eines Katalysators und eines Haftvermittlers zur Beschleunigung bzw. Verbesserung des Abbindens bzw. Vernetzens eines Klebstoffs.

Schließlich betrifft die vorliegende Erfindung eine Lösung bzw. Dispersion eines Haftvermittlers, welche einen Katalysator zur Beeinflussung des Abbindeverhaltens bzw. der Vernetzung eines reaktiven Klebstoffs enthält.

Unter dem Begriff des "Klebens" wird im Allgemeinen ein Fertigungsverfahren zum stoffschlüssigen Fügen von Werkstücken bzw. Substraten verstanden. Beim Kleben haftet der Klebstoff durch physikalische Wechselwirkung - gelegentlich auch durch chemische Wechselwirkung - der sogenannten Adhäsion, an den Werkstücken bzw. Substraten und verbindet diese zumeist dauerhaft. Da das Kleben einerseits eine großflächige und kraftschlüssige Verbindung von Werkstücken erlaubt und andererseits aufgrund seiner materialschonenden Eigenschaften geeignet ist, nahezu sämtliche Materialien miteinander zu verbinden, werden Klebeverfahren sowohl für den Heimbedarf als auch für die industrielle Anwendung vielfältig verwendet. Immer öfter werden andere Fügeverfahren, wie beispielsweise Schweißen oder Löten, aber auch Verschrauben, durch Klebeverfahren ersetzt. So stehen mittlerweile rund 50% der in Deutschland produzierten Waren mit Klebstoffen in Verbindung.

Von besonderer Bedeutung sind in diesem Zusammenhang reaktive Klebstoffsysteme, deren chemische Struktur sich während des Abbindens bzw. Aushärtevorgangs ändert, so dass besonders dauerhafte und irreversible Verklebungen erreicht werden können. Insbesondere in industriellen Anwendungen können mit reaktiven Klebstoffsystemen sehr beständige und feste Verklebungen erzielt werden, und dies oftmals in kurzer Zeit. Ein weiterer Vorteil reaktiver Klebstoffsysteme ist, dass sie im Allgemeinen lösemittelfrei sind. Es müssen folglich keine umweltproblematischen Lösemittel entfernt, gesammelt und recycelt werden.

Reaktive Klebstoffsysteme kommen üblicherweise als mehrkomponentige Systeme, insbesondere Zweikomponentensysteme, oder als Einkomponentensysteme zum Einsatz. Zweikomponentensysteme bestehen aus zwei unterschiedlichen chemischen Verbindungen bzw. Verbindungsgemischen, welche getrennt voneinander gelagert und kurz vor der Applikation gemischt werden. Durch das Mischen der Komponenten wird eine Polymerisations- bzw. Vernetzungsreaktion gestartet, welche zum Abbinden bzw. Aushärten des Klebstoffs führt. Beispiele für Zweikomponentensysteme sind Epoxidharzklebstoffe oder Methylmethacrylatklebstoffe. Reaktive Zweikomponentenklebstoffsysteme resultieren oftmals in sehr dauerhaften und stabilen Klebeverbindungen; nachteilig sind jedoch die begrenzte Verarbeitungszeit - auch Reaktions- oder Topfzeit genannt -, da der Fügevorgang nach Mischen der beiden Komponenten innerhalb eines determinierten Zeitfensters erfolgen muss um optimale Klebungen zu erzielen. Aufgrund der äußerst begrenzten Verarbeitungszeit gestaltet sich die Verwendung von Zweikomponentensystemen im industriellen Maßstab oftmals als schwierig, weshalb der Einsatz derartiger Systeme für eine Vielzahl von Anwendungen nicht möglich ist.

Einkomponentensysteme bestehen im Gegensatz zu den Zweikomponentensystemen aus nur einer Komponente, welche in der Regel applikationsfertig geliefert werden kann. Die Vernetzung des Klebstoffs erfolgt hier auch durch chemische Reaktion, welche jedoch beispielsweise durch Einwirkung von Strahlung oder Feuchtigkeit induziert wird. Strahlenhärtbare Systeme, insbesondere UV-strahlenhärtbare Systeme, sind oftmals auf Basis von Acrylaten ausgebildet und können durch Strahlungseinwirkung gezielt und rasch ausgehärtet werden. Nachteilig ist jedoch, dass in der Regel nur UV-durchlässige Substrate verklebt werden können.

Chemisch aushärtende Einkomponentensysteme vernetzen im Allgemeinen durch Aufnahme von Luftfeuchtigkeit, wie beispielsweise Einkomponenten-Polyurethanklebstoffe sowie Klebstoffe auf Basis silangepfropfter Polymere. Derartige Systeme haben jedoch den gravierenden Nachteil, dass die Abbindegeschwindigkeit bzw. Vernetzungsgeschwindigkeit äußerst gering ist, was eine Lagerung der gefügten Verbundwerkstücke erforderlich macht, ehe diese weiterverarbeitet werden können. Dies erhöht die Preise für die industrielle Anwendung durch längere Produktionszeiten.

Um den zuvor genannten Nachteilen zu begegnen, wurden reaktive Schmelzklebstoffsysteme entwickelt, welche aus der Schmelze aufgetragen werden und nach Erkalten auf physikalischem Wege eine gewisse Kohäsion bzw. Anfangsfestigkeit aufweisen, ehe beispielsweise durch feuchtigkeitsinduzierte Vernetzungsreaktion nach mehreren Stunden oder Tagen die Endfestigkeit erreicht wird. Jedoch ist auch in diesem Fall oftmals eine längere Lagerung der Verbundwerkstoffe bzw. -stücke notwendig, insbesondere für den Fall, dass diese nur nach Erreichen der Endfestigkeit weiterverarbeitet werden können. Darüber hinaus ist gerade die Verwendung von feuchtigkeitsreaktiven, d. h. feuchtigkeitsvernetzenden, Klebstoffen dahingehend problematisch, dass die Abbindegeschwindigkeit stark von den äußeren Bedingungen, insbesondere von Temperatur und Luftfeuchtigkeit, abhängig ist, was Produktionsprozesse schwerer planbar macht. Die Abhängigkeit von den äußeren Witterungsbedingungen führt insbesondere zu Schwankungen im Produktionsprozess im Laufe eines Jahres, da im Allgemeinen im Winter die Luftfeuchtigkeit im Vergleich zu den Sommermonaten deutlich herabgesetzt ist. Im Winter muss folglich mit deutlich längeren Lagerzeiten bis zur Erreichung der Endfestigkeit gerechnet werden. Auch Versuche, die Abhängigkeit von den äußeren Bedingungen durch eine Klimatisierung der Produktionshallen und eine Berieselung der Substrate mit Wasser zu minimieren, führen in der Regel nicht zum gewünschten Erfolg und verteuern den Produktionsprozess zusätzlich.

Um diesem Nachteil zu begegnen, ist es im Stand der Technik üblich, reaktiven einkomponentigen Schmelzklebstoffen das Abbinden bzw. die Vernetzung beschleunigende Katalysatoren zuzugeben. Dies resultiert zwar einerseits in einem schnelleren Erreichen der Endfestigkeit des ausgehärteten Klebstoffs, bringt jedoch den Nachteil mit sich, dass die Topfzeit und somit die Verarbeitungszeit des Schmelzklebstoffs deutlich herabgesetzt wird.

So beschreibt die DE 10 2011 077 200 A1 ein silanterminiertes Klebstoffsystem mit einem hohen Anteil an Füllstoffen, welchem zur Beschleunigung der Aushärtung Katalysatoren, insbesondere metallorganische Katalysatoren, zugegeben werden.

Die DE 10 2011 007 504 A1 betrifft eine reaktive Polyurethanzusammensetzung, welche komplexierte Katalysatoren enthält. Durch die Komplexierung der Katalysatoren wird eine verzögerte Reaktivität bei der Vernetzung bzw. dem Abbinden des Polyurethanklebstoffes erreicht. Nachteilig ist jedoch auch hierbei, dass der Prozess nur schwierig gesteuert werden kann.

Zur Erzielung eines guten Klebeergebnisses, insbesondere einer dauerhaften und beständigen Verklebung, ist es unerlässlich, dass der eingesetzte Klebstoff auf den zu verklebenden Substraten bzw. Werkstücken haftet. Zur Erzielung eines optimalen Haftergebnisses ist es üblich, die zu verklebenden Flächen gründlich zu reinigen und zu entfetten. Darüber hinaus werden weitere Methoden zur Oberflächenbehandlung eingesetzt, um die Adhäsionskräfte zwischen der Oberfläche des zu verklebenden Werkstücks und dem Klebstoff zu erhöhen. Insbesondere ist es in diesem Zusammenhang angestrebt, die Oberfläche des Substrats zu vergrößern bzw. die Oberflächenspannung zu steigern. So wird beispielsweise das sogenannte Korona-Verfahren oder eine Plasmabehandlung oder aber eine Flammvorbehandlung zur Erhöhung der Oberflächenspannung von Kunststoffsubstraten eingesetzt.

Darüber hinaus werden zu diesem Zweck oftmals auch Haftvermittler bzw. Primer verwendet. Bei Haftvermittlern bzw. Primern handelt es sich gerade im Klebstoffbereich um verdünnte Lösungen bzw. Dispersionen von Klebstoffen, insbesondere von im Allgemeinen nichtreaktiven Dispersionsklebstoffen. Durch den Einsatz von Haftvermittlern bzw. Primern lässt sich die Oberfläche der zu verklebenden Substrate bzw. Werkstücke in der Regel so weit vergrößern, dass die Klebstoffpolymere deutlich besser an den Werkstücken bzw. Substraten haften, was insbesondere für die Verklebung von Kunststoffsubstraten gilt. Eine Verbesserung des Abbindeverhaltens bzw. des Vernetzungsverhaltens von reaktiven Schmelzklebstoffen lässt sich jedoch auch durch den Einsatz von Haftvermittlern nicht erreichen.

Die DE 199 24 139 A1 betrifft eine Primerzusammensetzung für feuchtigkeitshärtende Polyurethanklebstoffe, insbesondere Schmelzklebstoffe, die mindestens ein thermoplastisches Polymer sowie mindestens ein flüchtiges organisches Lösungsmittel und mindestens einen Polyurethankatalysator aus der Gruppe der tertiären Amine und/oder metallorganischen Verbindungen enthalten, welche eine besonders rasche Aushärtung der darauf aufgetragenen feuchtigkeitshärtenden Klebstoffe bewirken sollen. Die Klebstoffe können somit frei von Katalysatoren für die Feuchtigkeitshärtung sein oder brauchen nur sehr geringe Konzentrationen zu enthalten, wodurch insbesondere die Stabilität von Schmelzklebstoffen signifikant verbessert werden soll.

Die US 2010/0059179 A1 betrifft ein System oder ein Kit, aufweisend i) eine stabile Lösung oder Dispersion eines Katalysators zur Vernetzung von reaktiven Klebstoffsystemen und getrennt hiervon ii) ein unvernetztes reaktives Klebstoffsystem, wobei der Katalysator des Teils i) die Vernetzung des reaktiven Klebstoffsystems beschleunigt. Das reaktive Klebstoffsystem kann ein Ein- oder Zweikomponentensystem sein. Weiterhin betrifft die Druckschrift ein Verfahren zum Verbinden eines reaktiven Klebstoffs mit einem Substrat, aufweisend: a) Inkontaktbringen eines Katalysators zur Vernetzung eines reaktiven Klebstoffs in einem flüchtigen Lösemittel mit der Oberfläche des Substrats, an welche der Klebstoff gebunden werden soll; b) Verdunsten des flüchtigen Lösemittels; c) Inkontaktbringen eines reaktiven Klebstoffs mit der in Schritt a) behandelten Oberfläche und d) Vernetzen des Klebstoffs. Das Verfahren wird in Abwesenheit eines Primers und eines Filmbildners durchgeführt.

Die US 2003/0084995 A1 betrifft eine Haftvermittlerzusammensetzung (Primer) zur Verbesserung des Klebeverhaltens zwischen einem polymeren Substrat und einem Klebstoff. Die Haftvermittlerzusammensetzung enthält ein Harz, ein Isocyanat, einen Katalysator, ein Lösemittel sowie gegebenenfalls einen optischen Aufheller.

Weiterhin betrifft die WO 2013/049095 A2 ein Verfahren zur Verklebung einer Polymeroberfläche (z. B. einer Fluorpolymeroberfläche) mit einem Substrat, wobei das Substrat Schaumbandsubstrate und damit hergestellte Artikel umfasst. Das Verfahren umfasst die Verwendung einer Haftvermittlerzusammensetzung mit einem Amidin-katalysator in Verbindung mit einem aminosubstituierten Organosilanester.

Die GB 954,863 A betrifft ein Verfahren zur Verbindung von Metallen.

Schließlich offenbart die WO 2006/008251 A1 reaktive Klebstoffzusammensetzungen, welche photolatente Katalysatoren enthalten. Die photolatenten Katalysatoren werden unmittelbar vor Verwendung der Klebstoffzusammensetzungen aktiviert.

Vor diesem Hintergrund liegt daher der vorliegenden Erfindung die Aufgabe zugrunde, ein Verfahren zum Fügen von mindestens zwei Werkstücken durch Kleben mittels eines Klebstoffes bereitzustellen, wobei die zuvor geschilderten Nachteile des Standes der Technik zumindest weitgehend vermieden oder aber wenigstens abgeschwächt werden.

Insbesondere ist es eine Aufgabe der vorliegenden Erfindung, eine Behandlung von zu verklebenden Substraten bzw. Werkstücken zu erreichen, durch welche zielgerichtet das Abbindeverhalten bzw. die Vernetzung von insbesondere reaktiven Klebstoffen gesteuert werden kann.

Darüber hinaus ist es eine weitere Aufgabe der vorliegenden Erfindung, ein Verfahren zum Fügen von mindestens zwei Werkstücken durch Kleben mittels eines Klebstoffs bereitzustellen, bei welchem sich die Eigenschaften des Klebstoffs, insbesondere dessen Abbindeverhalten, durch eine speziell abgestimmte Oberflächenbehandlung der zu verklebenden Substrate bzw. Werkstücke einstellen lassen.

Zur Lösung des zuvor geschilderten Problems schlägt die vorliegende Erfindung - gemäß einem ersten Aspekt der vorliegenden Erfindung - ein Verfahren zum Fügen von mindestens zwei Werkstücken durch Kleben mittels eines Klebstoffs nach Anspruch 1 vor; weitere, insbesondere vorteilhafte Ausgestaltungen des erfindungsgemäßen Verfahrens sind Gegenstand der diesbezüglichen Unteransprüche.

Darüber hinaus sind weiterer Gegenstand der vorliegenden Erfindung - gemäß einem zweiten Aspekt der vorliegenden Erfindung - die nach dem erfindungsgemäßen Verfahren erhältlichen Verbundwerkstücke nach Anspruch 8.

Wiederum weiterer Gegenstand der vorliegenden Erfindung - gemäß einem dritten Aspekt der vorliegenden Erfindung - ist die Verwendung einer Lösung bzw. Dispersion eines Katalysators und eines Haftvermittlers zur Beschleunigung bzw. Verbesserung des Abbindens und/oder Vernetzens eines Klebstoffs gemäß Anspruch 9.

Schließlich betrifft die vorliegende Erfindung - gemäß einem vierten Aspekt der vorliegenden Erfindung - eine Lösung bzw. Dispersion eines Haftvermittlers auf Basis eines nichtreaktiven Klebstoffs, welche einen Katalysator enthält, gemäß Anspruch 10.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in Bezug auf die übrigen Erfindungsaspekte entsprechend gelten.

Dies vorausgeschickt, wird im Folgenden die vorliegende Erfindung näher beschrieben.

Gegenstand der vorliegenden Erfindung ist somit - gemäß einem **ersten** Aspekt der vorliegenden Erfindung - ein Verfahren zum Fügen von mindestens zwei Werkstücken (Fügeteilen) durch Kleben mittels eines reaktiven Schmelzklebstoffs, wobei zumindest eines der Werkstücke vor der Aufbringung des Klebstoffs mit einem das Abbindeverhalten und/oder die Vernetzung des Klebstoffs beeinflussenden Katalysator behandelt bzw. beaufschlagt wird und nachfolgend der Klebstoff auf mindestens eines der Werkstücke aufgebracht wird und anschließend die Werkstücke miteinander verklebt werden,
wobei als Katalysator ein photolatenter Katalysator eingesetzt wird, wobei der Katalysator UV-aktivierbar ausgebildet ist und wobei der photolatente Katalysator ausgewählt ist aus titan-, zinn-, bismuth-, quecksilber- und/oder zinkbasierten metallorganischen Verbindungen, quarternären Ammoniumverbindungen und aromatischen Isocyanaten sowie deren Mischungen,
wobei mindestens eines der Werkstücke mit mindestens einem Haftvermittler (Primer) behandelt wird, wobei das Werkstück gleichzeitig oder vor der Behandlung mit dem Katalysator mit dem Haftvermittler behandelt wird, wobei der Katalysator dem Haftvermittler beigemischt ist und/oder wobei der Katalysator auf die Haftvermittlerschicht aufgebracht wird, und
wobei der Haftvermittler auf Basis einer wässrigen und/oder lösemittelhaltigen Dispersion eines nichtreaktiven Klebstoffs ausgebildet ist.

Unter Katalysatoren sind dabei im Rahmen der vorliegenden Erfindung nicht nur Katalysatoren im streng chemischen Sinn zu verstehen, d.h. Substanzen, welche eine Reaktion beschleunigen und die Aktivierungsenergie herabsenken, jedoch das thermodynamische Gleichgewicht nicht beeinflussen und unverändert aus der Reaktion hervorgehen. Vielmehr werden im Rahmen der vorliegenden Erfindung sämtliche Verbindungen als Katalysatoren bezeichnet, welche das Abbindeverhalten bzw. die Vernetzung von reaktiven Klebstoffen beeinflussen, insbesondere beschleunigen und/oder initiieren. Diese Verbindungen gehen oftmals nicht unverändert aus der Reaktion hervor, sondern reagieren mit einzelnen Molekülen der Klebstoffpolymere und induzieren somit weitere Reaktionen, welche zu einer Vernetzung der Klebstoffpolymere führen. Derartige Verbindungen werden auf dem Gebiet der Klebstoffe üblicherweise als Katalysatoren bezeichnet.

In vollkommen überraschender Weise hat die Anmelderin herausgefunden, dass es möglich ist, die Vorteile der Verwendung von Katalysatoren für reaktive Schmelzklebstoffe, nämlich ein beschleunigtes Vernetzen, einerseits zu nutzen und andererseits die damit verbundenen Nachteile, nämlich eine verkürzte Topf- oder Verarbeitungszeit, zu vermeiden.

Im Rahmen der vorliegenden Erfindung wird dies erreicht, indem mindestens eines der zu verklebenden Werkstücke bzw. Substrate vor Auftrag des Klebstoffs mit einem die Vernetzung bzw. das Abbinden des Klebstoffs beeinflussenden Katalysator behandelt wird. Wie die Versuche der Anmelderin überraschender Weise ergeben haben, diffundiert offensichtlich eine ausreichende Menge Katalysator in die Klebstoffschicht, selbst wenn der Katalysator beispielsweise Bestandteil einer Haftvermittler- bzw. Primerschicht ist, um das Abbindeverhalten bzw. die Vernetzung des Klebstoffs zu beeinflussen, insbesondere zu beschleunigen.

Durch die Verwendung eines Katalysators wird im Rahmen der vorliegenden Erfindung im Allgemeinen die Vernetzung beschleunigt und somit die Abbindegeschwindigkeit des Klebstoffs erhöht, so dass die Endfestigkeit früher erreicht wird. Hierdurch ist es möglich, bei der industriellen Fertigung, beispielsweise bei Folienkaschierungen, wie der Profilummantelung, oder der Beaufschlagung von plattenförmigen Werkstoffsubstraten mit Kantenbändern in der Möbelfertigung die Stand- und Lagerzeiten deutlich zu reduzieren. Hierdurch können Zeit, Lagerkapazität und somit letztlich Kosten gespart werden.

Durch gezielte Auswahl des Systems Katalysator/Klebstoff ist es sogar möglich, dass die Endfestigkeit des Klebstoffs nicht nur früher erreicht wird, sondern gegenüber katalysatorfreien Systemen erhöht ist.

Darüber hinaus kann das System auch derart eingestellt werden, dass die Anfangsfestigkeit gegenüber katalysatorfreien Systemen deutlich erhöht ist, d. h., dass die chemische Vernetzung parallel zu dem physikalischen Abbinden bzw. dem Erstarren eines Schmelzklebstoffs erfolgt.

Durch das erfindungsgemäße Verfahren ist es möglich, dass die Werkstücke, synonym auch als Fügeteile bzw. Substrate bezeichnet, bereits vor dem eigentlichen Fügevorgang vorbereitet werden, d. h. mit dem Katalysator behandelt werden. Hierbei ist es insbesondere auch möglich und vorteilhaft, dass eines der Substrate, beispielsweise ein Kantenband oder eine Folie, direkt bei der Herstellung im Rahmen der Oberflächenbehandlung, insbesondere während oder nach der Behandlung der Oberfläche mit einem Haftvermittler bzw. Primer, mit dem Katalysator behandelt bzw. mit diesem beaufschlagt wird.

Dies spart bei der späteren Verarbeitung, insbesondere beim Hersteller des Verbundwerkstoffs, Ressourcen und vermeidet das Risiko von Fehldosierungen.

Schließlich ist vorteilhaft, dass durch das erfindungsgemäße Verfahren die Reaktionszeit des Klebstoffs vor der Auftragung auf das Werkstück oder auf die Werkstücke nicht verkürzt wird, d. h. ein Schmelzklebstoff kann in der Schmelze vorgehalten werden, ohne dass es bereits zu einem verfrühten chemischen Aushärten des Klebstoffs kommt.

Im Rahmen der vorliegenden Erfindung wird folglich die Topf- bzw. Verarbeitungszeit der eingesetzten Klebstoffsysteme nicht verändert. Unter der Topf- bzw. Verarbeitungszeit ist die Zeitspanne zu verstehen, währenddessen der Klebstoff auf der Verarbeitungstemperatur gehalten werden kann und eine Viskosität aufweist, welche eine ausreichende Benetzung des Werkstücks bzw. des Substrats gewährleistet.

Im Allgemeinen wird das erfindungsgemäße Verfahren derart durchgeführt, dass das Verkleben unter Druck bzw. durch Verpressen der Werkstücke erfolgt. Im Rahmen des erfindungsgemäßen Verfahrens wird somit üblicherweise der eigentliche Fügevorgang durch Ausübung von Druck vorgenommen.

Im Rahmen der vorliegenden Erfindung hat es sich bewährt, wenn der Katalysator derart ausgewählt wird, dass die Zeit zur Erreichung der Endfestigkeit des Klebstoffs verkürzt wird. Gleichfalls kann es vorgesehen sein, dass der Katalysator die Anfangsfestigkeit des Klebstoffs erhöht. Dies gilt unabhängig davon, ob die Zeit bis zur Erreichung der Endfestigkeit des Klebstoffs verkürzt wird oder nicht. Unter dem Begriff "Anfangsfestigkeit" ist im Rahmen der vorliegenden Erfindung dabei die Festigkeit bzw. Kohäsion des Klebstoffs zu verstehen, welche dieser nach Abkühlung auf Raumtemperatur primär durch physikalisches Abbinden erreicht. Unter Begriff der "Endfestigkeit" ist im Rahmen der vorliegenden Erfindung die Festigkeit bzw. Kohäsion der Klebstoffschicht zu verstehen, welche diese durch die chemische Reaktion - zumeist durch Feuchtigkeit induziert - nach vollständigem Abschluss der chemischen Reaktion bzw. Vernetzung erreicht. Die Zeit bis zur Erreichung der Endfestigkeit kann mehrere Stunden oder sogar Tage betragen.

Im Rahmen der vorliegenden Erfindung ist es bevorzugt, wenn sowohl die Zeit bis zur Erreichung der Endfestigkeit verkürzt wird, als auch die Anfangsfestigkeit des Klebstoffs durch den Einsatz eines Katalysators erhöht wird.

In diesem Zusammenhang kann das gemäß einer bevorzugten Ausführungsform der vorliegenden Erfindung vorgesehen sein, dass durch die Verwendung des Katalysators auch die Endfestigkeit bzw. Kohäsion der Klebstoffschicht gegenüber katalysatorfreien Systemen erhöht ist.

Besonders gute Ergebnisse werden im Rahmen der vorliegenden Erfindung erhalten, wenn der Katalysator ausgewählt ist aus metallorganischen Verbindungen, Aminen und Ammoniumverbindungen sowie deren Mischungen. In diesem Zusammenhang kann es insbesondere vorgesehen sein, dass der Katalysator ausgewählt ist aus Zirkonchelat, Bismuth(III)neodecanoat, N,N-Dimethylethanolamin, Triethylendiamin, N-(3-Dimethylaminopropyl)-N,N-diisopropylamin, N,N-bis(3-Dimethylaminopropyl)-N-isopropylamin, Benzyldimethylamin und Benzalkoniumchlorid sowie deren Mischungen, vorzugsweise Bismuth(III)neodecanoat und/oder Triethylendiamin. Mit den zuvor genannten Katalysatorsystemen werden im Rahmen der vorliegenden Erfindung besonders gute Ergebnisse sowohl in Bezug auf die Anfangs- als auch die Endfestigkeit der Klebstoffschicht erzielt.

Erfindungsgemäß wird als Katalysator ein photolatenter Katalysator eingesetzt. Dabei werden im Rahmen der vorliegenden Erfindung besonders gute Ergebnisse erhalten, wenn der photolatente Katalysator UV-aktivierbar ausgebildet ist. Unter einem latenten Katalysator wird im Rahmen der vorliegenden Erfindung ein Katalysator verstanden, welcher spezielle Einsatzbedingungen aufweist, unter welchen er katalytische Aktivität zeigt. Außerhalb dieser Einsatzbedingungen besitzt der latente Katalysator keinerlei oder nur äußerst geringe katalytische Eigenschaften. Photolatente Katalysatoren weisen üblicherweise dann katalytische Eigenschaften auf, wenn sie elektromagnetischer Strahlung einer bestimmten Wellenlänge ausgesetzt werden, beispielsweise UV-Strahlung. Typischerweise bleibt ein latenter Katalysator nach seiner Aktivierung, insbesondere nach Bestrahlung, aktiv, selbst wenn keine Aktivierungsbedingungen mehr vorliegen, d. h. beispielsweise die Temperatur unter die Aktivierungstemperatur sinkt oder die Bestrahlung beendet wird.

Im Rahmen der vorliegenden Erfindung ist der photolatente Katalysator ausgewählt aus metallorganischen Verbindungen, insbesondere titan-, zinn-, bismuth-, quecksilber- und/oder zinkbasierten metallorganischen Verbindungen, quarternären Ammoniumverbindungen und aromatischen Isocyanaten sowie deren Mischungen.

Wie die Anmelderin überraschenderweise herausgefunden hat, lassen sich mit photolatenten Katalysatoren im Rahmen der vorliegenden Erfindung besonders gute Verklebungsergebnisse erzielen, und dies unabhängig davon, wie die Behandlung des Werkstücks mit dem Katalysator tatsächlich ausgestaltet ist. So kann der photolatente Katalysator einem Haftvermittler beigemischt werden oder nachträglich auf ein mit einem Haftvermittler versehenes Werkstück aufgetragen werden. Wird der Katalysator kurz vor oder während des Klebstoffauftrags aktiviert, so lassen sich erstaunlich feste und beständige Verklebungen erzielen, obwohl der Katalysator nicht dem Klebstoff beigemischt wurde. Offensichtlich kommt es auch bei latenten Katalysatoren zu einer ausreichenden Migration der aktivierten Katalysatoren in die Klebstoffschicht.

Der Einsatz latenter Katalysatoren, insbesondere photolatenter, Katalysatoren hat darüber hinaus den Vorteil, dass bei Verwendung von Haftvermittlern, ein deutlich breiteres Spektrum von Haftvermittlern eingesetzt werden kann. Wird ein das Abbindeverhalten bzw. die Vernetzung eines Klebstoffs beeinflussender Katalysator auf eine Haftvermittlerschicht aufgebracht bzw. einem Haftvermittler beigemischt, so muss im Vorfeld stets untersucht werden, ob der Katalysator mit dem Haftvermittler reagiert. Dies ist im Rahmen der vorliegenden Erfindung üblicherweise unerwünscht, da der Katalysator allein mit dem Klebstoff reagieren und dessen Vernetzungsverhalten in der gewünschten Richtung beeinflussen soll. Durch die Verwendung latenter Katalysatoren wird dieses Problem minimiert, da latente Katalysatoren nur unter bestimmten Bedingungen reaktiv bzw. aktiv sind. Der Einsatz latenter, insbesondere photolatenter, Katalysatoren erhöht somit die Einsatzmöglichkeiten des erfindungsgemäßen Verfahrens beträchtlich.

Üblicherweise wird der Katalysator im Rahmen der vorliegenden Erfindung in Form einer Lösung oder Dispersion auf das Werkstück aufgebracht. Durch das Aufbringen in Dispersion bzw. in Lösung lässt sich ein besonders gleichmäßiger Auftrag in wohl definierten Mengen, insbesondere in geringen Mengen und/oder mit geringen Schichtdicken, erzielen.

Was den Auftrag bzw. die Aufbringung des Katalysators auf das Werkstück anbelangt, so kann dies durch eine Vielzahl von aus dem Stand der Technik bekannten Möglichkeiten erfolgen. Es hat sich jedoch im Rahmen der vorliegenden Erfindung bewährt, wenn der Katalysator durch Tauchen, Rakeln, Walzen, Sprühauftrag, Düsen, Spritzen oder mittels eines Filzes, insbesondere durch Sprühauftrag, Rakeln, Walzen und/oder mittels eines Filzes, auf das Werkstück aufgebracht wird. Dies gilt insbesondere für den Fall, dass der Katalysator in Form einer Lösung oder Dispersion verwendet wird. Bei der industriellen Anwendung werden beste Ergebnisse erzielt, wenn der Auftrag des gelösten bzw. dispergierten Katalysators durch Rakeln, Walzen, Sprühauftrag oder mittels eines Filzes erfolgt.

Was nun die Mengen anbelangt, in welchen die im Rahmen der vorliegenden Erfindung eingesetzte Lösung bzw. Dispersion den Katalysator enthält, so kann diese gleichfalls in weiten Bereichen variieren. Besonders gute Ergebnisse werden jedoch erhalten, wenn die Lösung und/oder Dispersion den Katalysator in Mengen von 0,01 bis 10 Gew.-%, insbesondere 0,05 bis 8 Gew.-%, vorzugsweise 0,1 bis 5 Gew.-%, bevorzugt 0,15 bis 3 Gew.-%, besonders bevorzugt 0,2 bis 2 Gew.-%, ganz besonders bevorzugt 0,3 bis 1 Gew.-%, bezogen auf die Lösung bzw. Dispersion, enthält. In den zuvor genannten Mengen werden besonders gleichmäßige und schnelle Vernetzungen der eingesetzten Klebstoffe erzielt.

In diesem Zusammenhang kann es auch vorgesehen sein, dass die Lösung und/oder Dispersion noch weitere Inhaltsstoffe enthält bzw. dass der Katalysator einer Lösung und/oder Dispersion beigemischt ist, beispielsweise einem Haftvermittler bzw. Primer.

Gemäß einer bevorzugten Ausführungsform der vorliegenden Erfindung wird mindestens eines der Werkstücke, vorzugsweise das mit dem Katalysator zu behandelnde und/oder zu beaufschlagende Werkstück, mit mindestens einem Haftvermittler (Primer) behandelt. Besonders gute Ergebnisse werden in diesem Zusammenhang erhalten, wenn das Werkstück gleichzeitig oder vor der Behandlung mit dem Katalysator mit dem Haftvermittler behandelt wird. Unter Haftvermittler - synonym auch als Primer bezeichnet - wird im Rahmen der vorliegenden Erfindung nach DIN EN 923 das Auftragen eines Vorstrichs verstanden, der vor dem Klebstoffauftrag zur Verbesserung der Adhäsion und/oder der Beständigkeit einer Klebung auf eine Werkstück- bzw. Fügeteiloberfläche aufgebracht wird. Insbesondere bei der Verklebung von Kunststoffsubstraten bzw. Kunststofffügeteilen bzw. - werkstücken ist es von Vorteil, wenn diese mit einem Haftvermittler bzw. Primer vorbehandelt werden, um eine ausreichende Haftung des Klebstoffs auf den Fügeteilen bzw. dem Werkstück zu ermöglichen.

Gemäß einer besonderen Ausführungsform der vorliegenden Erfindung handelt es sich bei dem Haftvermittler bzw. Primer um einen Waschprimer. Waschprimer sind stark verdünnte Lösungen bzw. Dispersionen von Haftvermittlern bzw. Primern, welche nicht nur eine Oberflächenverbesserung durch Auftrag von Klebstoffpolymeren bewirken, sondern gleichermaßen zur Reinigung der Fügeteiloberfläche, d. h. zur Entfernung von anhaftenden Partikeln sowie die Verklebung behinderten Substanzen, beitragen.

Wenn im Rahmen der vorliegenden Erfindung ein Haftvermittler eingesetzt wird, so ist dieser im Allgemeinen auf Basis einer wässrigen und/oder lösemittelhaltigen Dispersion, Lösung oder Solubilisierung ausgebildet. Besonders gute Ergebnisse werden in diesem Zusammenhang erhalten, wenn der Anteil an Wasser oder organischem Lösemittel 60 bis 99,5 Gew.-%, insbesondere 70 bis 99 Gew.-%, vorzugsweise 82 bis 99 Gew.-%, bevorzugt 85 bis 98,5 Gew.-%, bezogen auf den Haftvermittler (d. h. die Dispersion, Lösung oder Solubilisierung des Haftvermittlers), beträgt.

Was nun die Auswahl des Lösemittels bzw. Dispersionsmediums für den Haftvermittler anbelangt, so kann es prinzipiell jedes geeignete Lösemittel bzw. Dispersionsmedium ausgewählt werden. Üblicherweise ist das Lösemittel bzw. Dispersionsmedium jedoch ausgewählt aus organischen Lösemitteln und Wasser sowie deren Mischungen. Im Rahmen der vorliegenden Erfindung hat es sich bewährt, wenn das organische Lösemittel ausgewählt ist aus Alkoholen, insbesondere Ethanol und Isopropanol, Estern, insbesondere Ethylacetat und Dibasischen Estern, Ketonen, insbesondere Aceton und Methylethylketon (MEK), Toluol, Tetrahydrofuran und Benzin sowie deren Mischungen. Die Löse- bzw. Dispergiermittel müssen einerseits eine gute Löse- bzw. Dispergierfähigkeit für die Klebstoffpolymere aufweisen, andererseits muss jedoch auch eine Fähigkeit zur Reinigung, insbesondere zur Entfettung der Werkstückoberfläche gegeben sein.

Da das Lösemittel bzw. Dispersionsmittel nach Auftrag des Haftvermittlers bzw. Primers wieder entfernt wird, ist es bevorzugt, wenn möglichst flüchtige Lösemittel bzw. Dispersionsmittel eingesetzt werden.

Die zuvor genannten wässrigen und organisch basierten Lösemittel können prinzipiell für sämtliche Lösungen und Dispersionen des Katalysators eingesetzt werden, wobei die zuvor genannten Kriterien zu beachten sind, d. h. auch für Lösungen und Dispersionen, die allein den Katalysator enthalten.

Üblicherweise besitzt ein Haftvermittler einen spezifischen Feststoffgehalt, wobei es sich im Rahmen der vorliegenden Erfindung bewährt hat, wenn der Haftvermittler einen Feststoffgehalt von 0,5 bis 40 Gew.-%, vorzugsweise von 1,0 bis 30 Gew.-%, bevorzugt 1,3 bis 18 Gew.-%, besonders bevorzugt 1,5 bis 15 Gew.-%, bezogen auf den Haftvermittler, aufweist. Üblicherweise setzt sich der Feststoffanteil eines Haftvermittlers aus den Klebstoffpolymeren sowie gegebenenfalls Füllstoffen und weiteren Additiven, wie Dispergiermitteln etc., zusammen.

Im Rahmen der vorliegenden Erfindung ist der Haftvermittler auf Basis einer wässrigen und/oder lösemittelhaltigen Dispersion eines nichtreaktiven Klebstoffs, insbesondere eines Dispersionsklebstoffes, ausgebildet. Der im Rahmen der vorliegenden Erfindung eingesetzte Haftvermittler reagiert somit vorzugsweise nicht mit dem Katalysator, mit welchem das Werkstück bzw. Fügeteil behandelt wird.

Was nun die Auswahl eines nichtreaktiven Dispersionsklebstoffs anbelangt, so ist eine große Bandbreite an möglichen Klebstoffen einsetzbar. Im Rahmen der vorliegenden Erfindung hat es sich jedoch bewährt, wenn als Haftvermittler ein Dispersionsklebstoff eingesetzt wird, ausgewählt aus der Gruppe von Polyurethandispersionen, Acrylatdispersionen, Chloroprendispersionen, Epoxidharzdispersionen, Ethylenvinylacetatdispersionen (EVA-Dispersionen) und Polyvinylacetatdispersionen (PVAc-Dispersionen) sowie deren Mischungen aus zwei oder mehreren der genannten Dispersionen. Bevorzugt ist es dabei, wenn als Haftvermittler ein Dispersionsklebstoff auf Basis einer insbesondere wässrig basierten Polyurethandispersion eingesetzt wird.

Darüber hinaus kann es vorgesehen sein, dass dem Haftvermittler Füllstoffe zugesetzt sind, wobei deren Gehalt in weiten Bereichen variieren kann. Es werden jedoch besonders gute Ergebnisse im Rahmen der vorliegenden Erfindung erhalten, wenn der Haftvermittler Füllstoffe, insbesondere anorganische Füllstoffe, in Mengen von 0,1 bis 20 Gew.-%, insbesondere 1 bis 15 Gew.-%, vorzugsweise 2 bis 10 Gew.-%, bevorzugt 3 bis 7 Gew.-%, bezogen auf den Haftvermittler, enthält. Geeignete Füllstoffe können die Oberfläche des Fügeteils bzw. Werkstücks nochmals vergrößern, wodurch eine verbesserte Adhäsion zwischen Klebstoff und Werkstück erzielt wird. Waschprimer enthalten jedoch in der Regel keinen oder nur einen äußerst geringen Anteil an Füllstoffen, da es sich üblicherweise um sehr stark verdünnte Lösungen bzw. Dispersionen von Klebstoffpolymeren handelt.

Wenn der Haftvermittler einen Füllstoff enthält, so hat es sich im Rahmen der vorliegenden Erfindung bewährt, wenn der Haftvermittler insbesondere hochdisperse Kieselsäure, vorzugsweise gegebenenfalls organisch modifizierte hochdisperse Kieselsäure, als Füllstoff enthält. Durch den Einsatz von hochdisperser Kieselsäure, insbesondere von gegebenenfalls organisch modifizierter hochdisperser Kieselsäure, wird einerseits die Oberfläche des zu behandelnden Werkstücks bzw. des Fügeteils vergrößert, so dass eine bessere Adhäsion zwischen Klebstoff und Fügeteil bzw. Werkstück erreicht wird, andererseits wird jedoch auch insbesondere durch eine organische Modifizierung die Kompatibilität zwischen Füllstoff und den übrigen Bestandteilen des Haftvermittlers deutlich verbessert, so dass eine besonders gleichmäßige Verteilung der Füllstoffe in der Primerzusammensetzung bzw. Haftvermittlerzusammensetzung ermöglicht wird.

Im Allgemeinen ist es vorgesehen, dass der Haftvermittler bzw. Primer durch Tauchen, Rakeln, Walzen, Sprühauftrag, Düsen, Spritzen oder mittels eines Filzes auf das Werkstück bzw. das Fügeteil aufgetragen wird. Besonders gute Ergebnisse werden erzielt, wenn der Auftrag des Haftvermittlers bzw. Primers durch Sprühauftrag, Rakeln, Walzen und/oder mittels eines Filzes erfolgt. Im Rahmen der industriellen Anwendung erfolgt der Auftrag des Haftvermittlers bevorzugt durch Sprühauftrag, Walzen oder mittels eines Filzes, da mit diesen Methoden besonders geringe Schichtdicken erzielt werden können.

Im Rahmen der vorliegenden Erfindung hat es sich besonders bewährt, wenn der Katalysator dem Haftvermittler beigemischt ist und/oder wenn der Katalysator auf die Haftvermittlerschicht aufgebracht wird. Falls der Katalysator dem Haftvermittler beigemischt ist, so enthält die Lösung bzw. Dispersion des Haftvermittlers den Katalysator in den zuvor genannten, auf eine Lösung bzw. Dispersion des Katalysators bezogenen Mengen. Eine Beimischung des Katalysators zu einem Haftvermittler bzw. ein Aufbringen des Katalysators auf einen Haftvermittler resultiert in einer guten Anhaftung des Katalysators auf dem Substrat, so dass die Wirkung des Katalysators voll ausgenutzt werden kann. Ein Vorteil der Beimischung des Katalysators zu dem Haftvermittler liegt darin, dass der Katalysator ohne zusätzlichen Arbeitsgang auf das Werkstück aufgebracht wird. Die Aufbringung erfolgt üblicherweise direkt beim Hersteller des Werkstücks bzw. Fügeteils, beispielsweise einem Kantenbandhersteller oder einem Folienhersteller.

Wenn das Werkstück bzw. Fügeteil mit einem Haftvermittler und einem Katalysator behandelt bzw. beaufschlagt wird, so hat es sich bewährt, wenn bestimmte massenbezogene Verhältnisse zwischen Katalysator einerseits und Haftvermittler andererseits eingehalten werden. Besonders gute Ergebnisse werden im Rahmen der vorliegenden Erfindung erhalten, wenn das massebezogene Verhältnis von Katalysator einerseits zum Trockengewicht des Haftvermittlers andererseits im Bereich von 20 : 1 bis 1 : 2.000, insbesondere 10 : 1 bis 1 : 1.000, vorzugsweise 8 : 1 bis 1 : 500, bevorzugt 5 : 1 bis 1 : 200, besonders bevorzugt 3 : 1 bis 1 : 100, ganz besonders bevorzugt 2 : 1 bis 1 : 50, eingestellt wird. Unter dem Begriff "Trockengewicht" ist dasjenige Gewicht des Haftvermittlers zu verstehen, welches nach Entfernung des Lösemittels bzw. Dispersionsmittels verbleibt.

Gemäß einer bevorzugten Ausführungsform der vorliegenden Erfindung wird die Behandlung und/oder Beaufschlagung des Werkstücks mit dem Katalysator, insbesondere die Behandlung und/oder Beaufschlagung des Werkstücks mit dem Katalysator und dem Haftvermittler, räumlich und/oder zeitlich von der Aufbringung des Klebstoffs und der Verklebung getrennt durchgeführt. Wie zuvor bereits dargelegt, ist es besonders vorteilhaft, wenn eine Beaufschlagung des Werkstücks mit einem Katalysator direkt bei der Herstellung des Werkstücks, und zwar gleichzeitig mit der Behandlung mit einem Primer oder auf diese nachfolgend, erfolgt. Die entsprechenden Werkstücke bzw. Fügeteile können dann bereits vorkonfektioniert zum Hersteller der Verbundwerkstoffe transportiert und unmittelbar vor Ort weiterverarbeitet werden, ohne dass die Werkstücke noch aufwendig behandelt werden müssten. Dies spart beim Hersteller der Verbundwerkstoffe Lagerkapazität, Maschineneinsatz sowie Zeit und Kosten.

Gemäß einer besonderen Ausführungsform der vorliegenden Erfindung ist es vorgesehen, dass alle Werkstücke vor dem Fügen mit dem Katalysator behandelt werden. Auf diese Weise wird zum einen oftmals eine verbesserte Anfangsfestigkeit der reaktiven Schmelzklebstoffe erreicht, andererseits wird auch die Endfestigkeit der Klebstoffe deutlich schneller erreicht als bei Auftrag des Katalysators auf lediglich ein Fügeteil bzw. ein Werkstück. Das erfindungsgemäße Verfahren kann derart ausgestaltet, dass die Fügeteile direkt bei ihrer Herstellung mit Haftvermittler und Katalysator versehen werden, es ist jedoch auch möglich, dass allein die Fügeteile bzw. Werkstücke, welche üblicherweise bereits bei ihrer Herstellung mit einem Haftvermittler versehen werden auch gleichzeitig mit dem Katalysator behandelt werden, während die übrigen Fügeteile, wie beispielsweise Kunststoffprofile bzw. plattenförmige Werkstücke für die Möbelherstellung, erst beim Hersteller des Verbundwerkstoffs mit einem Haftvermittler und/oder einem Katalysator behandelt werden.

Im Allgemeinen wird im Rahmen der vorliegenden Erfindung als Klebstoff ein reaktiver, insbesondere feuchtigkeitsvernetzender, Klebstoff, insbesondere ein reaktiver Schmelzklebstoff eingesetzt. In diesem Zusammenhang ist es besonders bevorzugt, wenn ein feuchtigkeitsvernetzender Schmelzklebstoff, vorzugsweise ein Schmelzklebstoff auf Basis von silangepfropften amorphen Poly-α-Olefinen und/oder isocyanatterminierten Polyurethanen, eingesetzt wird. Besonders gute Ergebnisse werden im Rahmen der vorliegenden Erfindung erhalten, wenn Klebstoff ein feuchtigkeitsvernetzender 1-Komponenten-Polyurethan-Schmelzklebstoff eingesetzt wird.

Üblicherweise enthält der erfindungsgemäß eingesetzte Klebstoff außerdem mindestens ein Additiv. Bei diesen Additiven handelt es vorzugsweise um an sich bekannte Zusatzstoffe, wie insbesondere Weichmacher, hochsiedende organische Öle, Ester oder andere der Plastifizierung dienende Additive, Stabilisatoren, insbesondere UV-Stabilisatoren, Antioxidantien, Säurefänger, insbesondere nanoteilige Füllstoffe und/oder Alterungsschutzmittel. Gleichfalls ist es möglich, dass dem Schmelzklebstoff nichtreaktive Polymere, Harze und/oder Wachse zugesetzt werden.

Was die Menge anbelangt, in welchen der Klebstoff die Additive enthält, so kann diese in weiten Bereichen variieren. Es hat sich jedoch bewährt, wenn der Klebstoff die Additive in Mengen von 1 bis 70 Gew.-%, insbesondere 5 bis 65 Gew.-%, vorzugsweise 10 bis 60 Gew.-%, bezogen auf den Klebstoff, enthält. Insbesondere in den vorgenannten Mengen werden mit den erfindungsgemäß eingesetzten Klebstoffen hervorragende Verklebungsergebnisse erzielt.

Üblicherweise wird im Rahmen der vorliegenden Erfindung der Klebstoff bei Temperaturen im Bereich von 80 bis 160 °C, insbesondere 95 bis 150 °C, vorzugsweise 100 bis 140 °C, auf das Werkstück aufgebracht.

Weiterhin kann es im Rahmen der vorliegenden Erfindung vorgesehen sein, dass der Klebstoff eine Verarbeitungszeit von mindestens 5 Stunden, insbesondere mindestens 7 Stunden, vorzugsweise mindestens 8 Stunden, aufweist. Die Verarbeitungszeit wird synonym auch als Topfzeit bezeichnet und ist diejenige Zeit, welche der Klebstoff bei der Verarbeitungstemperatur gehalten werden kann, ohne dass eine merkliche Vernetzung stattfindet.

Was die Viskosität des eingesetzten Klebstoffs, insbesondere unter Auftragsbedingungen, anbelangt, so kann diese naturgemäß in weiten Bereichen in Abhängigkeit vom jeweiligen Anwendungszweck variieren. Es hat sich jedoch im Rahmen der vorliegenden Erfindung bewährt, wenn der Klebstoff bei einer Temperatur von 120 °C eine Brookfield-Viskosität im Bereich von 10.000 bis 150.000 mPas, insbesondere 15.000 bis 120.000 mPas, vorzugsweise 20.000 bis 100.000 mPas, bevorzugt 25.000 bis 90.000 mPas, aufweist.

Mit reaktiven Schmelzklebstoffen, welche die vorgenannten Viskositäten, Verarbeitungstemperaturen sowie Verarbeitungszeiten aufweisen, werden im Rahmen der vorliegenden Erfindung die besten Ergebnisse erzielt.

Gemäß einer besonderen Ausführungsform der vorliegenden Erfindung wird das Verfahren als Folienkaschierung, insbesondere als Profilummantelung, durchgeführt. Gemäß dieser besonderen Ausführungsform des erfindungsgemäßen Verfahrens sind die Parameter derart angepasst, dass eine Aufbringung von nahezu zweidimensionalen Werkstücken bzw. Fügeteilen, wie beispielsweise Folien, auf dreidimensionale Profile, ermöglicht wird.

Gemäß der zuvor genannten besonderen Ausführungsform der vorliegenden Erfindung ist mindestens eine der Werkstücke ein insbesondere zweidimensionales Flächengebilde, vorzugsweise eine Folie. Weiterhin kann es vorgesehen sein, dass mindestens eines der Werkstücke dreidimensional ausgebildet ist, insbesondere ein Profil ist.

Beispiele für diese Verfahrensvariante sind die Ummantelung von Kunststoffprofilen, beispielsweise bei der Herstellung von Kunststofffenstern. In diesem Zusammenhang ist es auch möglich, dass das zweidimensionale Flächengebilde, insbesondere die Folie, einen mehrschichtigen Aufbau aufweist. So ist es beispielsweise bei der Herstellung von Kunststofffenstern üblich, dass Kunststoffprofile auf Basis von PVC mit einer PVC-Folie beschichtet werden, welche wiederum an ihrer Aussenseite eine Lage von Polymethylmethacrylat (PMMA) als UV-Schutz aufweist.

Im Rahmen der vorliegenden Erfindung wird vorzugsweise ein Flächengebilde aus Kunststoff eingesetzt. Hierbei hat es sich bewährt, wenn ein Flächengebilde auf Basis von (i) Polyolefinen, bevorzugt Polyethylen (PE) oder Polypropylen (PP); (ii) Polymethacrylaten (PMA); (iii) Polymethylmethacrylaten (PMMA); (iv) Polyvinylchlorid (PVC); (v) Polyvinylidenhalogenid, insbesondere Polyvinylidenfluorid (PVDF) oder Polyvinylidenchlorid (PVDC); (vi) Acrylnitril/Butadien/Styrol-Copolymer (ABS); (vii) Polyamiden (PA), Polycarbonaten (PC); (viii) Melamin-Formaldehydharzen; (ix) Epoxidharzen; (x) Phenolharzen oder (xi) Harnstoffharzen, bevorzugt Polyvinylchlorid (PVC), eingesetzt wird. Flächengebilde, insbesondere Folien auf Basis von Polyvinylchlorid (PVC) werden bei der Ummantelung von Kunststoffprofilen, welche beispielsweise zur Herstellung von Kunststofffenstern eingesetzt werden, verwendet.

Was das dreidimensionale Werkstück anbelangt, so kann dieses aus einer Vielzahl von Stoffen bestehen. Beispielsweise kann als Werkstück ein Werkstück aus einem thermoplastischen oder duroplastischen Kunststoff oder aus Holz oder aus Papier oder aus Pappe oder aus Metallen eingesetzt werden. Falls ein Werkstück aus Metall eingesetzt wird, so handelt es sich bevorzugt um ein Werkstück aus Aluminium und/oder Edelstahl. Im Rahmen der vorliegenden Erfindung ist es jedoch bevorzugt, wenn ein Werkstück aus einem thermoplastischen oder duroplastischen Kunststoff, insbesondere aus einem thermoplastischen Kunststoff, eingesetzt wird. In diesem Zusammenhang hat es sich bewährt, wenn das Werkstück auf Basis von (i) Polyolefinen, bevorzugt Polyethylen (PE) oder Polypropylen (PP); (ii) Polymethacrylaten (PMA); (iii) Polymethylmethacrylaten (PMMA); (iv) Polyvinylchlorid (PVC); (v) Polyvinylidenhalogenid, insbesondere Polyvinylidenfluorid (PVDF) oder Polyvinylidenchlorid (PVDC); (vi) Acrylnitril/Butadien/Styrol-Copolymer (ABS); (vii) Polyamiden (PA), Polycarbonaten (PC); (viii) Melamin-Formaldehydharzen; (ix) Epoxidharzen; (x) Phenolharzen oder (xi) Harnstoffharzen, besonders bevorzugt Polyvinylchlorid (PVC), eingesetzt wird. Auch was das dreidimensionale Werkstück bzw. Profil anbelangt, kann es sein, dass dieses einen schalenartigen Aufbau aus mehreren Materialien aufweist.

Wenn das erfindungsgemäße Verfahren als Folienkaschierung bzw. Profilummantelung durchgeführt wird, wird üblicherweise eine Haftvermittlerschicht mit einer sehr geringen Schichtdicke bzw. mit einem geringen Trockengewicht aufgetragen. In diesem Zusammenhang werden im Rahmen der vorliegenden Erfindung besonders gute Ergebnisse erhalten, wenn der Haftvermittler mit einem Trockengewicht von 0,01 bis 50 g/m², insbesondere 0,05 bis 25 g/m², vorzugsweise 0,1 bis 10 g/m², auf das Werkstück aufgebracht wird.

Vorzugsweise wird im Rahmen dieser Ausführungsform ein Waschprimer verwendet.

Auch was die Menge des eingesetzten Klebstoffs anbelangt, so ist diese im Rahmen einer Folienkaschierung bzw. Profilummantelung eher gering. Üblicherweise wird der Klebstoff mit einem Auftragsgewicht von 50 bis 200 g/m², insbesondere 10 bis 150 g/m², vorzugsweise 25 bis 120 g/m², bevorzugt 40 bis 90 g/m², auf das Werkstück aufgebracht. Bei den vorgenannten Werten und Parametern werden mit dem erfindungsgemäßen Verfahren im Rahmen einer Folienkaschierung bzw. Profilummantelung besonders gute Ergebnisse erhalten.

Gemäß einer weiteren Ausführungsform der vorliegenden Erfindung wird das Verfahren als Kantenbandverklebung bzw. Kantenbandbeschichtung durchgeführt.

Wenn das erfindungsgemäße Verfahren eine Kantenbandverklebung ist, so ist üblicherweise mindestens eines der Werkstücke ein insbesondere plattenförmiges Werkstoffteil auf Basis von Holz, Holzwerkstoffen, Kunststoffen, Metallen oder Glas, insbesondere Holz oder Holzwerkstoffen, vorzugsweise eine Span- oder mitteldichte Faserplatte (MDF-Platte). Kantenbandverklebungen werden insbesondere bei der Herstellung von Möbeln bzw. Möbelteilen durchgeführt, um insbesondere die Schmalseiten von plattenförmigen Werkstücken zu beschichten.

Weiterhin ist es gemäß dieser Ausführungsform üblicherweise vorgesehen, dass mindestens eines der Werkstücke ein Kantenband ist, insbesondere wobei ein Kantenband aus einem thermoplastischen oder duroplastischen Kunststoff oder aus Holz oder aus Papier oder Pappe oder aus Metallen verwendet wird. Vorzugsweise wird jedoch im Rahmen der vorliegenden Erfindung ein Kantenband aus einem thermoplastischen oder duroplastischen Kunststoff, vorzugsweise ein Kantenband aus einem thermoplastischen Kunststoff, eingesetzt. In diesem Zusammenhang kann insbesondere ein Kantenband auf Basis von (i) Polyolefinen, bevorzugt Polyethylen (PE) oder Polypropylen (PP); (ii) Polymethacrylaten (PMA); (iii) Polymethylmethacrylaten (PMMA); (iv) Polyvinylchlorid (PVC); (v) Polyvinylidenhalogenid, insbesondere Polyvinylidenfluorid (PVDF) oder Polyvinylidenchlorid (PVDC); (vi) Acrylnitril/Butadien/Styrol-Terpolymer (ABS); (vii) Polyamiden (PA), Polycarbonaten (PC); (viii) Melamin-Formaldehydharzen; (ix) Epoxidharzen; (x) Phenolharzen oder (xi) Harnstoffharzen, eingesetzt werden.

Wenn das erfindungsgemäße Verfahren als Kantenbandverklebung durchgeführt wird, so wird üblicherweise ein Haftvermittler mit einem Trockengewicht von 1 bis 20 g/m², insbesondere 2 bis 15 g/m², vorzugsweise 3 bis 12 g/m², auf das Werkstück aufgebracht.

Die gemäß dieser Ausführungsform eingesetzte Menge an Klebstoff kann gleichfalls in weiten Bereichen variieren, wobei jedoch vorzugsweise tendenziell eher größere Mengen an Klebstoff eingesetzt werden. Im Rahmen der vorliegenden Erfindung werden besonders gute Ergebnisse erhalten, wenn der Klebstoff mit einem Auftragsgewicht von 1 bis 350 g/m², insbesondere 25 bis 250 g/m², vorzugsweise 50 bis 200 g/m², bevorzugt 80 bis 150 g/m², auf das Werkstück aufgebracht wird.

Weiterer Gegenstand der vorliegenden Erfindung - gemäß einem **zweiten** Aspekt der vorliegenden Erfindung - ist ein Verbundwerkstück, insbesondere ein mit einem Kantenband beaufschlagtes plattenförmiges Werkstück oder ein mit einer Folie kaschiertes Profil, vorzugsweise Kunststofffensterprofil, welches mit dem erfindungsgemäßen Verfahren - wie zuvor beschrieben - erhältlich ist.

Das erfindungsgemäße Verfahren erlaubt die Herstellung von Verbundwerkstücken mit einer verbesserten Verklebung, welche darüber hinaus in kurzer Zeit hergestellt werden können.

Für weitergehende Einzelheiten zu dem erfindungsgemäßen Verbundwerkstück kann auf die entsprechenden Ausführungen zu dem erfindungsgemäßen Verfahren verwiesen werden, welche in Bezug auf das erfindungsgemäße Verbundwerkstück entsprechend gelten.

Wiederum weiterer Gegenstand der vorliegenden Erfindung - gemäß einem **dritten** Aspekt der vorliegenden Erfindung - ist die Verwendung einer Lösung und/oder Dispersion eines photolatenten Katalysators und eines Haftvermittlers zur Beschleunigung und/oder Verbesserung des Abbindens und/oder Vernetzens eines reaktiven Klebstoffs, vorzugsweise eines reaktiven Schmelzklebstoffs.

Im Rahmen der vorliegenden Erfindung ist es somit möglich, die Anfangsfestigkeit von reaktiven Klebstoffen, insbesondere von reaktiven Schmelzklebstoffen, zu verbessern, sowie das Erreichen der Endfestigkeit zu verkürzen, indem einem Haftvermittler bzw. Primer ein Katalysator beigemischt wird. Dies erlaubt eine besonders zeit- und kostengünstige Behandlung von Werkstücken, insbesondere Substraten, wie beispielsweise Folien oder Kantenbändern, mit einem Katalysator, da derartige Werkstücke bzw. Fügeteile üblicherweise generell mit einem Haftvermittler bzw. Primer behandelt werden.

Für weitergehende Einzelheiten zu der erfindungsgemäßen Verwendung kann auf die obigen Ausführungen zu den anderen Erfindungsaspekten verwiesen werden, welche in Bezug auf die erfindungsgemäße Verwendung entsprechend gelten.

Schließlich ist wiederum weiterer Gegenstand der vorliegenden Erfindung - gemäß einem **vierten** Aspekt der vorliegenden Erfindung - eine Lösung und/oder Dispersion eines Haftvermittlers auf Basis eines nichtreaktiven Klebstoffs, insbesondere eines nichtreaktiven Dispersionsklebstoffs, enthaltend einen photolatenten Katalysator, wobei der photolatente Katalysator ausgewählt ist aus metallorganischen Verbindungen, insbesondere titan-, zinn-, bismuth-, quecksilber- und/oder zinkbasierten metallorganischen Verbindungen, quarternären Ammoniumverbindungen und aromatischen Isocyanaten sowie deren Mischungen, zur Beeinflussung des Abbindeverhaltens und/oder der Vernetzung eines reaktiven Klebstoffs, insbesondere eines reaktiven Schmelzklebstoffs.

Im Rahmen der vorliegenden Erfindung sind Lösungen bzw. Dispersionen von Haftvermittlern üblicherweise auf Basis von nichtreaktiven Dispersionsklebstoffen ausgebildet, so dass ein Katalysator, welche das Abbinden bzw. die Vernetzung eines reaktiven Klebstoffs beeinflusst, nicht mit dem Haftvermittler reagiert. Auf diese Weise ist es möglich, dass der Haftvermittler den Katalysator enthält und wie ein handelsüblicher katalysatorfreier Haftvermittler in Bezug auf seine Anwendungseigenschaften und Verarbeitungszeiten verwendet werden kann.

Für weitergehende Einzelheiten zu diesem Erfindungsaspekt kann auf die obigen Ausführungen zu den weiteren Erfindungsaspekten verwiesen werden, welche in Bezug auf die erfindungsgemäße Lösung bzw. Dispersion entsprechend gelten.

Weitere Ausgestaltungen, Abwandlungen, Variationen und Besonderheiten der vorliegenden Offenbarung sind für den Fachmann beim Lesen der Beschreibung ohne Weiteres erkennbar und realisierbar. Der Rahmen der vorliegenden Erfindung wird durch die Ansprüche definiert.

Die vorliegende Erfindung wird anhand der folgenden Ausführungsbeispiele veranschaulicht, ohne jedoch die vorliegende Erfindung hierauf zu beschränken.

### Ausführungsbeispiele

Der Gegenstand der vorliegenden Erfindung wird anhand von zwei Beispielen, einer Folienkaschierung sowie einer Kantenbandbeschichtung, nachfolgend verdeutlicht:

### I.) Folienkaschierung

### I.1) Herstellung der Prüfkörper

8 mm starke weichmacherfreie PVC-Platten werden in 190 x 70 mm große Abschnitte unterteilt, mit Ethanol gereinigt und anschließend getrocknet. Nachfolgend werden definierte Mengen von Waschprimern, welchen gegebenenfalls Katalysatoren zugesetzt wurden, mittels eines 6 µm Spiralrakels auf die Plattenabschnitte aufgetragen. Es werden insgesamt drei verschiedene Waschprimer eingesetzt:

### Primer 1

1,5 Gew.-% thermoplastisches Polyurethan
98,5 Gew.-% organisches Lösemittel
Auftragsgewicht (trocken): 250 mg/m²

### Primer 2

1,8 Gew.-% thermoplastisches Polyurethan
98,2 Gew.-% organische Lösemittel und Hochsieder, wie beispielsweise Dibasische Ester (DBE)
Auftragsgewicht (trocken): 250 mg/m²

### Primer 3

15 Gew.-% thermoplastisches Polyurethan
85 Gew.-% organisches Lösemittel
Auftragsgewicht (trocken): 1.600 mg/m²

Den Waschprimern werden die folgenden Katalysatoren zugesetzt.
**Katalysator 1:** N,N-Dimethylethanolamin
**Katalysator 2:** Triethylendiamin
**Katalysator 3:** Bismuth(III)neodecanoat

Es werden einerseits Versuche mit den reinen Waschprimerlösungen (Nullproben) sowie andererseits mit Waschprimerlösungen, welche die oben angegebenen Katalysatoren in Mengen von 0,1; 0,2 und 0,5 Gew.-%, bezogen auf den Waschprimer, enthalten, durchgeführt.

Nach Entfernung des Lösemittels wird ein reaktiver Schmelzklebstoff auf die vorbehandelten PVC-Platten aufgetragen. Der Klebstoff wird in einem Kartuschenvorwärmer auf ca. 140 °C erhitzt und als Schmelze mit Hilfe einer Kartuschenpistole und einem 60 µm Kastenrakel auf die Platten aufgetragen, so dass ein Auftragsgewicht von ca. 60 g/m² resultiert. Es wurden Versuche mit zwei unterschiedlichen reaktiven Schmelzen durchgeführt:

### PUR1:

Polyurethanbasierter reaktiver Schmelzklebstoff mit einer Brookfield-Viskosität von 36.000 mPas bei einer Temperatur von 140 °C und einer Reaktionszeit von drei Tagen.

### PUR2:

Polyurethanbasierter reaktiver Schmelzklebstoff mit einer Brookfield-Viskosität von 40.000 mPas bei einer Temperatur von 140 °C und einer Reaktionszeit von weniger als zwei Tagen.

Zeitnah nach Erkalten des Schmelzklebstoffs wird die mit Klebstoff beschichtete PVC-Platte mit einer PVC-Folie in Kontakt gebracht und der Klebstoff mit Hilfe einer Flachpresse reaktiviert. Hierzu ist die untere Platte der Flachpresse auf 100 °C aufgeheizt und mit einer Gummimatte belegt. Bei einem Druck von 3 N/cm² und einer Presszeit von 30 Sekunden wird so eine Fugen- bzw. Aktivierungstemperatur von ca. 65 °C erreicht.

### I.2) Überprüfung der Festigkeit der Verklebung

Zur Bestimmung der Festigkeit der Verklebung werden an den Folienkörpern Schälfestigkeitsprüfungen durchgeführt.

Hierzu wird an den Probekörpern wird eine 90° Rollenschälfestigkeitsprüfung in Anlehnung DIN-EN 1372 sowie RAL-GZ 716/1, Prüfverfahren 3.17, durchgeführt. Die PVC-Platten werden in 190 x 70 mm große Stücke, entsprechend den unter I.1) genannten Abschnitten, zerteilt und die Folie entlang der Längsrichtung in zwei 20 mm breite Streifen geteilt.

Es werden insgesamt zwei unterschiedliche Versuchsreihen durchgeführt. Versuchsreihe 1 wird mit einem einseitigen Katalysatorauftrag allein auf die PVC-Platte durchgeführt, wohingegen Versuchsreihe 2 mit einem Katalysatorauftrag sowohl auf die PVC-Platte auch als auf die PVC-Folie durchgeführt wird. Die Versuche sind in den nachfolgenden Tabellen zusammengefasst.

### Versuchsreihe 1

### 1. Versuche mit Primer 1

**Tab. 1: Verklebungsfestigkeit und Auftrag von Primer 1, Katalysator 1 und PUR1 bei Auftrag auf PVC-Platten**

| | Kraft [N/cm] | | | |
|---|---|---|---|---|
| Zeit in h | Nullprobe | 0,05 % Kat 1 | 0,1 % Kat 1 | 0,5 % Kat 1 |
| 0,25 | 7,3 | 7,2 | 8,9 | 8,6 |
| 0,5 | 8,0 | 9,8 | 12,4 | 10,7 |
| 1 | 9,0 | 9,8 | 14,5 | 11,5 |
| 2 | 12,0 | 11,0 | 13,8 | 12,3 |
| 3 | 13,6 | 12,0 | 13,7 | 10,8 |
| 4 | 14,2 | 12,5 | 15,3 | 11,1 |
| 6 | 15,9 | 13,9 | 16,7 | 11,7 |
| 12 | 20,3 | 22,0 | 27,1 | 26,2 |
| 14 | 23,5 | 24,7 | 27,3 | 27,9 |
| 16 | 25,4 | 26,9 | 28,3 | 30,6 |
| 18 | 25,7 | 27,6 | 29,8 | FR |
| 20 | 26,7 | FR | FR | |
| 24 | 30,1 | | | |
| 72 | FR | | | |

| | | | | |
|---|---|---|---|---|
| FR = Folienriss | | | | |

**Tab. 2: Verklebungsfestigkeit nach Auftrag von Primer 1, Katalysator 2 und PUR1 bei Auftrag auf PVC-Platten**

| | Kraft [N/cm] | | | |
|---|---|---|---|---|
| Zeit in h | Nullprobe | 0,05 % Kat 2 | 0,1 % Kat 2 | 0,5 % Kat 2 |
| 0,25 | 7,3 | 9,7 | 11,7 | 7,4 |
| 0,5 | 8,0 | 10,5 | 12,7 | 8,3 |
| 1 | 9,0 | 11,3 | 13,6 | 9,4 |
| 2 | 12,0 | 11,5 | 14,1 | 11,8 |
| 3 | 13,6 | 11,0 | 15,2 | 13,2 |
| 4 | 14,2 | 12,6 | 14,6 | 14,1 |
| 6 | 15,9 | 14,4 | 15,8 | 16,3 |
| 12 | 20,3 | 21,1 | 23,4 | 26,1 |
| 14 | 23,5 | 22,0 | 26,0 | 28,8 |
| 16 | 25,4 | 24,2 | 27,4 | FR |
| 18 | 25,7 | 24,7 | 28,5 | |
| 20 | 26,7 | 26,4 | FR | |
| 24 | 30,1 | 29,0 | | |
| 72 | FR | FR | | |

| | | | | |
|---|---|---|---|---|
| FR = Folienriss | | | | |

**Tab. 3: Verklebungsfestigkeit nach Auftrag von Primer 1, Katalysator 3 und PUR1 auf PVC-Platten**

| | Kraft [N/cm] | | | |
|---|---|---|---|---|
| Zeit in h | Nullprobe | 0,05 % Kat 3 | 0,1 % Kat 3 | 0,5 % Kat 3 |
| 0,25 | 7,3 | 7,9 | 11,2 | 8,4 |
| 0,5 | 8,0 | 9,1 | 12,9 | 9,2 |
| 1 | 9,0 | 11,1 | 13,2 | 9,3 |
| 2 | 12,0 | 12,6 | 12,9 | 10,0 |
| 3 | 13,6 | 13,1 | 12,6 | 11,0 |
| 4 | 14,2 | 14,4 | 12,8 | 11,7 |
| 6 | 15,9 | 14,4 | 14,6 | 13,8 |
| 12 | 20,3 | 19,0 | 21,3 | 21,7 |
| 14 | 23,5 | 20,0 | 23,2 | 23,4 |
| 16 | 25,4 | 23,8 | 23,9 | 24,2 |
| 18 | 25,7 | 25,6 | 25,1 | 27,7 |
| 20 | 26,7 | 29,8 | 27,0 | 29,1 |
| 24 | 30,1 | FR | 30,3 | FR |
| 72 | FR | | FR | |

| | | | | |
|---|---|---|---|---|
| FR = Folienriss | | | | |

### 2. Versuche mit Primer 2

**Tab. 4: Verklebungsfestigkeit nach Auftrag von Primer 2, Katalysator 1 und PUR1 auf PVC-Platte**

| | Kraft [N/cm] | | | |
|---|---|---|---|---|
| Zeit in h | Nullprobe | 0,05 % Kat 1 | 0,1 % Kat 1 | 0,5 % Kat 1 |
| 0,25 | 7,5 | 8,1 | 7,8 | 7,5 |
| 0,5 | 8,4 | 8,3 | 8,3 | 8,4 |
| 1 | 10,3 | 8,8 | 9,4 | 8,9 |
| 2 | 12,0 | 9,3 | 10,3 | 9,9 |
| 3 | 12,9 | 10,5 | 11,0 | 10,9 |
| 4 | 13,9 | 11,2 | 11,9 | 12,2 |
| 6 | 14,5 | 11,5 | 14,1 | 14,8 |
| 12 | 20,1 | 21,7 | 20,0 | 25,9 |
| 14 | 21,8 | 24,9 | 24,1 | 29,8 |
| 16 | 24,1 | 28,3 | 26,4 | 32,2 |
| 18 | 26,7 | 31,1 | 29,7 | FR |
| 20 | 27,3 | FR | FR | |
| 24 | 28,3 | | | |
| 72 | FR | | | |

| | | | | |
|---|---|---|---|---|
| FR = Folienriss | | | | |

**Tab. 5: Verklebungsfestigkeit nach Auftrag von Primer 2, Katalysator 2 und PUR1 auf PVC-Platten**

| | Kraft [N/cm] | | | |
|---|---|---|---|---|
| Zeit in h | Nullprobe | 0,05 % Kat 2 | 0,1 % Kat 2 | 0,5 % Kat 2 |
| 0,25 | 7,5 | 7,5 | 7,9 | 7,7 |
| 0,5 | 8,4 | 9,0 | 8,7 | 8,3 |
| 1 | 10,3 | 10,1 | 9,2 | 8,5 |
| 2 | 12,0 | 10,7 | 9,5 | 9,2 |
| 3 | 12,9 | 10,8 | 10,4 | 9,9 |
| 4 | 13,9 | 11,4 | 10,4 | 11,0 |
| 6 | 14,5 | 13,0 | 12,2 | 13,2 |
| 12 | 20,1 | 22,6 | 24,4 | 19,0 |
| 14 | 21,8 | 26,9 | 26,7 | 21,2 |
| 16 | 24,1 | 29,1 | 29,0 | 26,4 |
| 18 | 26,7 | FR | 30,7 | 29,8 |
| 20 | 27,3 | | FR | FR |
| 24 | 28,3 | | | |
| 72 | FR | | | |

| | | | | |
|---|---|---|---|---|
| FR = Folienriss | | | | |

**Tab. 6: Verklebungsfestigkeit nach Auftrag von Primer 2, Katalysator 3 und PUR1 auf PVC-Platten**

| | Kraft [N/cm] | | | |
|---|---|---|---|---|
| Zeit in h | Nullprobe | 0,05 % Kat 3 | 0,1 % Kat 3 | 0,5 % Kat 3 |
| 0,25 | 7,5 | 7,8 | 9,1 | 8,1 |
| 0,5 | 8,4 | 8,3 | 9,0 | 9,0 |
| 1 | 10,3 | 9,1 | 8,8 | 9,5 |
| 2 | 12,0 | 10,6 | 9,7 | 10,8 |
| 3 | 12,9 | 11,4 | 11,0 | 11,1 |
| 4 | 13,9 | 12,6 | 11,6 | 11,2 |
| 6 | 14,5 | 17,1 | 12,2 | 14,2 |
| 12 | 20,1 | 25,4 | 22,7 | 24,8 |
| 14 | 21,8 | 25,8 | 25,3 | 26,3 |
| 16 | 24,1 | 26,6 | 28,1 | 26,9 |
| 18 | 26,7 | 29,6 | 29,2 | 28,6 |
| 20 | 27,3 | FR | 30,8 | 30,1 |
| 24 | 28,3 | | FR | FR |
| 72 | FR | | | |

| | | | | |
|---|---|---|---|---|
| FR = Folienriss | | | | |

### 3. Versuche mit Primer 3

**Tab. 7: Verklebungsfestigkeit nach Auftrag von Primer 3 verschiedenen Katalysatoren sowie PUR1 auf PVC-Platten**

| | Kraft [N/cm] | | | |
|---|---|---|---|---|
| Zeit in h | Nullprobe | 1,0 % Kat 1 | 1,0 % Kat 2 | 1,0 % Kat 3 |
| 0,25 | 9,8 | 10,8 | 10,1 | 9,9 |
| 0,5 | 10,4 | 11,0 | 10,8 | 10,3 |
| 1 | 11,9 | 12,3 | 10,7 | 10,6 |
| 2 | 11,7 | 16,0 | 12,3 | 12,0 |
| 3 | 12,9 | 17,5 | 14,5 | 12,6 |
| 4 | 15,3 | 20,0 | 17,4 | 14,2 |
| 6 | 19,2 | 23,8 | 26,5 | 18,4 |
| 12 | 24,3 | 28,3 | 31,9 | 24,7 |
| 14 | 28,2 | FR | FR | 26,9 |
| 16 | FR | | | 28,3 |
| 18 | | | | 32,1 |
| 20 | | | | FR |

| | | | | |
|---|---|---|---|---|
| FR = Folienriss | | | | |

**Tab. 8: Verklebungsfestigkeit nach Auftrag von Primer 3 mit Katalysatoren 1 und 2 und PUR2 auf PVC-Platten**

| | Kraft [N/cm] | | |
|---|---|---|---|
| Zeit in h | Nullprobe | 1,0 % Kat 1 | 1,0 % Kat 2 |
| 0,25 | 26,8 | 29,4 | FR |
| 0,5 | 30,0 | 32,3 | |
| 1 | FR | FR | |

| | | | |
|---|---|---|---|
| FR = Folienriss | | | |

### Versuchsreihe 2

**Tab. 9: Verklebungsfestigkeit nach Auftrag von Primer und PUR1 auf PVC-Platte und Folie**

| | Kraft [N/cm] | | | |
|---|---|---|---|---|
| | Primer 1 | | Primer 3 | |
| Zeit in h | 1,0 % Kat 1 | 1,0 % Kat 2 | 1,0 % Kat 1 | 1,0 % Kat 2 |
| 0,25 | 10,1 | 11,4 | 8,4 | 10,2 |
| 0,5 | 13,1 | 18,4 | 10,6 | 13,0 |
| 1 | 16,7 | 27,8 | 17,9 | 23,2 |
| 2 | 21,1 | 32,0 | 26,3 | 31,3 |
| 3 | 27,3 | FR | FR | FR |
| 4 | 31,0 | | | |
| 6 | FR | | | |

| | | | | |
|---|---|---|---|---|
| FR = Folienriss | | | | |

Es zeigt sich, dass die Verwendung von Katalysatoren in Haftvermittlern selbst bei alleinigem Auftrag des mit einem Katalysator versetzten Haftvermittlers eine verbesserte Adhäsion und Kohäsion sowie eine Verkürzung der Zeit bis zum Folienriss eintritt. Insbesondere zeigt sich, dass bei höheren Mengen an Katalysator (0,5 Gew.-% Katalysator oder höher) eine deutliche Verkürzung der Reaktionszeit erreicht werden kann.

Darüber hinaus zeigt sich in der Versuchsreihe 2, dass durch einen Auftrag des mit einem Katalysator versetzten Haftvermittlers sowohl auf das Kunststoffprofil als auch auf die Kunststofffolie eine nochmals deutlich verkürzte Reaktionszeit erzielt werden kann.

### II.) Kantenbandbeschichtung

Es wird untersucht, wie sich die Anwesenheit von auf die Fügeteile aufgebrachten Katalysatoren auf die Reaktivität des Schmelzklebstoffs bei einer Kantenbandbeschichtung auswirkt. Es werden Spanplatten mit Polypropylenkantenbändern beschichtet. Zu diesem Zweck werden unterschiedliche Versuchsreihen durchgeführt: In der ersten Versuchsreihe (Versuchsreihe 1) wird der Katalysator auf ein Polypropylenkantenband (PP-Kante) aufgebracht, während in der zweiten Versuchsreihe (Versuchsreihe 2) die Katalysatorlösung sowohl auf das Polypropylenkantenband (PP-Kante) als auch auf die Spanplatte aufgebracht wird.

### II.1) Präparation der Polypropylenkante (PP-Kante)

Ein 2 cm-breites Polypropylenkantenband (PP-Kante) wird auf 80 cm Länge mit einer Mischung aus 95 Gewichtsteilen Primer 4 und 5 Gewichtsteilen Primer 5 behandelt, wobei die Primermischung mit einem Trockengewicht von 10 g/m² aufgetragen wird. Folgende Primer werden verwendet:

### Primer 4

Polyurethanbasierter Primer mit 13 Gew.-% Festkörperanteil
4 Gew.-% thermoplastisches Polyurethan
4 Gew.-% CPVC
5 Gew.-% hochdisperse Kieselsäure
87 Gew.-% organische Lösemittel

### Primer 5

Polyurethanprimer mit einem Feststoffanteil von ca. 13 Gew.-%
8 Gew.-% thermoplastisches Polyurethan
5 Gew.-% hochdisperse Kieselsäure
87 Gew.-% organische Lösemittel

Nach Entfernung der Lösemittel werden die geprimerten Kantenbänder mit Ethylacetat (Nullprobe) bzw. Lösungen aus 95 Gew.-% Ethylacetat und 5 Gew.-% Katalysator behandelt, indem die Lösung dünn auf das geprimerte Kantenband aufgesprüht wird. Es wurden folgende Katalysatoren eingesetzt:
**Katalysator 1:** N,N-Dimethylethanolamin
**Katalysator 2:** Triethylendiamin
**Katalysator 4:** 10%ige Benzalkoniumchloridlösung
**Katalysator 5:** N-(3-Dimethylaminopropyl)-N,N-diisopropanolamin

Nach Trocknung des Lösemittels wird ein reaktiver Schmelzklebstoff auf Polyurethanbasis mit einem Auftragsgewicht von 250 g/m² auf das Kantenband aufgetragen und dieses umgehend mit der Stirnseite einer Spanplatte verklebt.

### II.2) Überprüfung der Klebungsfestigkeit

In Anlehnung an DIN-EN 1372 wird die Rollenschälfestigkeit der Kantenbänder überprüft. Die Versuchsergebnisse sind in der nachfolgenden Tabelle 10 wiedergegeben.

### II.2.1.) Katalysatorauftrag allein auf das Kantenband

**Tabelle 10: Verklebunsfestikeit nach Primerauftrag auf PP-Kante**

| KatalysatorLösung | Nullprobe¹ | BACI² | TDA³ | DMEA⁴ | DPA⁵ |
|---|---|---|---|---|---|
| Zeit | Rollenschälversuch [N/cm] | | | | |
| 6 h | 26 | 20 | 22 | 22 | 14 |
| 24 h | 52 | 34 | 40 | 41 | 40 |
| 72 h | 76 | 75 | 71 | 71 | 54 |
| 7d | 98 | 105 | 103 | 95 | 24 |

| | | | | | |
|---|---|---|---|---|---|
| ¹ Ethylacetat ² 95 Gew.-% Ethylacetat und 5 Gew.-% Benzalkoniumchloridlösung (10 %) ³ 95 Gew.-% Ethylacetat und 5 Gew.-% Triethylendiamin ⁴ 95 Gew.-% Ethylacetat und 5 Gew.-% N,N-Dimethylethanolamin ⁵ 95 Gew.-% Ethylacetat und 5 Gew.-% N-(3-Dimethylaminopropyl)-N,N-diisopropylamin | | | | | |

### II.2.2.) Katalysatorauftrag auf Kantenband und Spanplatte

Das Polypropylenkantenband (PP-Kante) wird wie zuvor beschrieben vorbereitet (d. h. Primer- und Katalysatorauftrag). Kurz vor Auftrag des Klebstoffs wird auch die Spanplatte mit der Katalysatorlösung behandelt. Nachdem dann der Klebstoff auf die Spanplatte aufgebracht wurde, erfolgt umgehend die Verklebung.

**Tabelle 11: Verklebungsfestigkeit nach Katalysatorauftrag auf PP-Kante und Spanplatte**

| Katalysatorlösung | Nullprobe¹ | BACI² | TDA³ | DMEA⁴ |
|---|---|---|---|---|
| Zeit | Rollenschälversuch [N/cm] | | | |
| 6 h | 22,4 | 25,7 | 25,8 | 26,1 |
| 24 h | 44,2 | 47,3 | 74,7 | 45 |
| 72 h | 73,6 | 78,2 | 87,8 | 79,4 |
| 7d | 79,6 | 93,4 | 104,4 | 91,2 |

| | | | | |
|---|---|---|---|---|
| ¹ Ethylacetat ² 95 Gew.-% Ethylacetat und 5 Gew.-% Benzalkoniumchlorid (10 % in THF) ³ 95 Gew.-% Ethylacetat und 5 Gew.-% Triethylendiamin ⁴ 95 Gew.-% Ethylacetat und 5 Gew.-% N,N-Dimethylethanolamin | | | | |

Auch im Rahmen der Kantenbandverklebung zeigt sich, dass die Verwendung von Katalysatoren in Haftvermittlern die Reaktionszeit der eingesetzten reaktiven Schmelzklebstoffe deutlich verringert. Dies gilt insbesondere, wenn der Katalysator sowohl auf die Kante als auch auf die Spanplatte aufgetragen wird.

### III.) Verwendung photolatenter Katalysatoren

Im Folgenden wird untersucht, wie sich die Verwendung photolatenter Katalysatoren in oder auf einer Haftvermittlerschicht auf die Reaktivität von Schmelzklebstoffen bei Kantenbandbeschichtungen und Folienkaschierungen auswirkt.

### III.1) Kantenbandbeschichtung

Polypropylenkantenbänder (PP-Kanten) wurden wie unter II.1) beschrieben mit den Primern 4 und 5 behandelt, wobei den Primern 0,1 bis 1 Gew.% eines photolatenten, UV-aktivierbaren Katalysators zugesetzt sind. Nach Auftrag der Primer wird das Lösemittel entfernt.

Kurz vor der Verklebung wird die Spanplatte mit einer Lösung von 10 Gewichtsteilen eines photolatenten, UV-aktivierbaren Katalysators in 90 Gewichtsteilen n-Butylacetat behandelt und das Lösemittel anschließend entfernt.

Nach dem Auftrag der photolatenten Katalysatorlösung auf die Stirnseite der Spanplatte werden sowohl das Kantenband als auch die Spanplatte mit einer LED UV-A-Lampe bei einer Vorschubgeschwindigkeit von ca. 20 m/min belichtet. Anschließend wird umgehend ein reaktiver Schmelzklebstoff auf Polyurethanbasis mit einem Auftragsgewicht von 250 g/m² auf das Kantenband aufgetragen und dieses mit der Stirnseite der Spanplatte verklebt.

Die Klebungsfestigkeit wird durch Bestimmung der Rollenschälfestigkeit in Anlehnung an DIN-EN 1372 überprüft. Die Versuchsergebnisse sind in den nachfolgenden Tabellen 12 und 13 zusammengefasst.

**Tabelle 12: Verklebungsfestigkeit nach Katalysatorauftrag auf PP-Kante und Spanplatte unter Verwendung von Primer 4**

| KatalysatorLösung¹ | Nullprobe | 0,1 | 0,25 | 1 |
|---|---|---|---|---|
| Zeit | Rollenschälversuch [N/cm] | | | |
| 6 h | 21,9 | 23,1 | 26,2 | 27,1 |
| 24 h | 43,2 | 55,5 | 74,3 | 75,9 |
| 72 h | 72,4 | 79,1 | 88,8 | 90 |
| 7d | 78,1 | 90,6 | 105,6 | 107,8 |

| | | | | |
|---|---|---|---|---|
| ¹ Gewichtsteile im Primer | | | | |

**Tabelle 13: Verklebungsfestigkeit nach Katalysatorauftrag auf PP-Kante und Spanplatte unter Verwendung von Primer 5**

| KatalysatorLösung¹ | Nullprobe | 0,1 | 0,25 | 1 |
|---|---|---|---|---|
| Zeit | Rollenschälversuch [N/cm] | | | |
| 6 h | 22,1 | 24,3 | 27 | 27,8 |
| 24 h | 44,1 | 58 | 75,3 | 77,1 |
| 72 h | 72,6 | 80,2 | 90,6 | 91,7 |
| 7d | 79,4 | 81,9 | 106 | 108,2 |

| | | | | |
|---|---|---|---|---|
| ¹ Gewichtsteile im Primer | | | | |

### III.2) Folienkaschierung

Entsprechend Beispiel I werden Folienkaschierungen unter Verwendung von Primer 3 und PUR1 durchgeführt. Dem Primer werden jeweils 0,5 bzw. 1,0 % eines photolatenten Katalysators zugegeben, welcher unmittelbar vor Verklebung mittels einer UV-A LED-Lampe aktiviert wird. Die Verklebungsfestigkeiten werden anschließend in Anlehnung an DIN-EN 1372 bestimmt und mit der Nullprobe verglichen.

Die Versuchsergebnisse sind in der nachfolgenden Tabelle 14 zusammengefasst:

**Tab. 14: Verklebungsfestigkeit nach Auftrag von Primer 3 mit und ohne photolatente Katalysatoren wie PUR1 auf PVC-Platten**

| | Kraft [N/cm] | | |
|---|---|---|---|
| Zeit in h | Nullprobe | 0,5 % Kat | 1,0 % Kat |
| 0,25 | 9,7 | 10,2 | 11,1 |
| 0,5 | 10,4 | 11,3 | 12,6 |
| 1 | 11,5 | 12,1 | 16,3 |
| 2 | 12,4 | 13,6 | 18,7 |
| 3 | 13,2 | 16,9 | 24,2 |
| 4 | 18,9 | 19,8 | 28,3 |
| 6 | 19,8 | 29,3 | 32,6 |
| 12 | 25,0 | 30,6 | FR |
| 14 | 28,2 | FR | |
| 16 | 28,4 | | |
| 18 | FR | | |
| 20 | | | |

| | | | |
|---|---|---|---|
| FR = Folienriss | | | |

Die durchgeführten Versuche zeigen, dass unter Verwendung photolatenter Katalysatoren sowohl im Rahmen von Kantenbandbeschichtungen als auch bei Folienkaschierungen sehr gute Ergebnisse erhalten werden.

## Patentansprüche

1. Verfahren zum Fügen von mindestens zwei Werkstücken (Fügeteilen) durch Kleben mittels eines reaktiven Schmelzklebstoffs,
wobei zumindest eines der Werkstücke vor der Aufbringung des Klebstoffs mit einem das Abbindeverhalten und/oder die Vernetzung des Klebstoffs beeinflussenden Katalysator behandelt und/oder beaufschlagt wird und nachfolgend der Klebstoff auf mindestens eines der Werkstücke aufgebracht wird und anschließend die Werkstücke miteinander verklebt werden,
wobei als Katalysator ein photolatenter Katalysator eingesetzt wird, wobei der Katalysator UV-aktivierbar ausgebildet ist und wobei der photolatente Katalysator ausgewählt ist aus titan-, zinn-, bismuth-, quecksilber- und/oder zinkbasierten metallorganischen Verbindungen, quarternären Ammoniumverbindungen und aromatischen Isocyanaten sowie deren Mischungen,
wobei mindestens eines der Werkstücke mit mindestens einem Haftvermittler (Primer) behandelt wird, wobei das Werkstück gleichzeitig oder vor der Behandlung mit dem Katalysator mit dem Haftvermittler behandelt wird, wobei der Katalysator dem Haftvermittler beigemischt ist und/oder wobei der Katalysator auf die Haftvermittlerschicht aufgebracht wird, und
wobei der Haftvermittler auf Basis einer wässrigen und/oder lösemittelhaltigen Dispersion eines nichtreaktiven Klebstoffs ausgebildet ist.

2. Verfahren nach Anspruch 1, **dadurch gekennzeichnet,**
**dass** der Katalysator in Form einer Lösung oder Dispersion auf das Werkstück aufgebracht wird und/oder
**dass** der Katalysator durch Tauchen, Rakeln, Walzen, Sprühauftrag, Düsen, Spritzen oder mittels eines Filzes, insbesondere durch Sprühauftrag, Rakeln, Walzen und/oder mittels eines Filzes, auf das Werkstück aufgebracht wird und/oder
**dass** die Lösung und/oder Dispersion den Katalysator in Mengen von 0,01 bis 10 Gew.-%, insbesondere 0,05 bis 8 Gew.-%, vorzugsweise 0,1 bis 5 Gew.-%, bevorzugt 0,15 bis 3 Gew.-%, besonders bevorzugt 0,2 bis 2 Gew.-%, ganz besonders bevorzugt 0,3 bis 1 Gew.-%, bezogen auf die Lösung und/oder Dispersion, enthält.

3. Verfahren nach Anspruch 1 oder 2, **dadurch gekennzeichnet, dass** der Haftvermittler ein Waschprimer ist.

4. Verfahren nach einem der vorangehenden Ansprüche, **dadurch gekennzeichnet,**
**dass** der Haftvermittler einen Feststoffgehalt von 0,5 bis 40 Gew.-%, vorzugsweise von 1,0 bis 30 Gew.-%, bevorzugt 1,3 bis 18 Gew.-%, besonders bevorzugt 1,5 bis 15 Gew.-%, bezogen auf den Haftvermittler, aufweist und/oder
**dass** der Haftvermittler auf Basis eines Dispersionsklebstoffes ausgebildet ist insbesondere wobei als Haftvermittler ein Dispersionsklebstoff eingesetzt wird, ausgewählt aus der Gruppe von Polyurethandispersionen, Acrylatdispersionen, Chloroprendispersionen, Epoxidharzdispersionen, Ethylenvinylacetatdispersionen (EVA-Dispersionen) und Polyvinylacetatdispersionen (PVAc-Dispersionen) sowie Mischungen aus zwei oder mehreren der vorgenannten Dispersionen, insbesondere wobei als Haftvermittler ein Dispersionsklebstoff auf Basis einer insbesondere wässrig basierten Polyurethandispersion eingesetzt wird.

5. Verfahren nach einem der vorangehenden Ansprüche, **dadurch gekennzeichnet,**
**dass** der Haftvermittler und/oder Primer durch Tauchen, Rakeln, Walzen, Sprühauftrag, Düsen, Spritzen oder mittels eines Filzes, insbesondere durch Sprühauftrag, Rakeln, Walzen und/oder mittels eines Filzes auf das Werkstück aufgetragen wird, und/oder
**dass** das massebezogene Verhältnis von Katalysator einerseits zum Trockengewicht des Haftvermittler andererseits im Bereich von 20 : 1 bis 1 : 2.000, insbesondere 10 : 1 bis 1 : 1.000, vorzugsweise 8 : 1 bis 1 : 500, bevorzugt 5 : 1 bis 1 : 200, besonders bevorzugt 3 : 1 bis 1 : 100, ganz besonders bevorzugt 2 : 1 bis 1 : 50, eingestellt wird und/oder
**dass** alle Werkstücke vor dem Fügen mit dem Katalysator behandelt werden.

6. Verfahren nach einen der vorangehenden Ansprüche, **dadurch gekennzeichnet, dass** das Verfahren als Folienkaschierung, insbesondere als Profilummantelung, durchgeführt wird.

7. Verfahren nach einen der vorangehenden Ansprüche, **dadurch gekennzeichnet, dass** das Verfahren als Kantenbandverklebung durchgeführt wird.

8. Verbundwerkstück, insbesondere mit einem Kantenband beaufschlagtes plattenförmiges Werkstück oder mit einer Folie kaschiertes Profil, vorzugsweise Kunststofffensterprofil, erhältlich nach einem der vorangehenden Ansprüche.

9. Verwendung einer Lösung und/oder Dispersion eines photolatenten Katalysator und eines Haftvermittlers zur Beschleunigung und/oder Verbesserung des Abbindens und/oder Vernetzen eines reaktiven Klebstoffs, vorzugsweise eines reaktiven Schmelzklebstoffs.

10. Lösung und/oder Dispersion eines Haftvermittlers auf Basis eines nichtreaktiven Klebstoffs, insbesondere eines nichtreaktiven Dispersionsklebstoffs, enthaltend einen photolatenten Katalysator, wobei der photolatente Katalysator ausgewählt ist aus metallorganischen Verbindungen, insbesondere titan-, zinn-, bismuth-, quecksilber- und/oder zinkbasierten metallorganischen Verbindungen, quarternären Ammoniumverbindungen und aromatischen Isocyanaten sowie deren Mischungen, zur Beeinflussung des Abbindeverhaltens und/oder der Vernetzung eines reaktiven Klebstoffs, insbesondere eines reaktiven Schmelzklebstoffs.

## Claims

1. A method for joining at least two workpieces (joint parts) by bonding by means of a reactive hot-melt adhesive,
wherein, before application of the adhesive, at least one of the workpieces is treated and/or charged with a catalyst affecting the setting behaviour and/or the crosslinking of the adhesive and the adhesive is subsequently applied to at least one of the workpieces and the workpieces are subsequently bonded together,
wherein the catalyst used is a photolatent catalyst, wherein the catalyst is formed to be UV-activatable and wherein the photolatent catalyst is selected from titanium-, tin-, bismuth-, mercury- and/or zinc-based metalorganic compounds, quaternary ammonium compounds and aromatic isocyanates and their mixtures,
wherein at least one of the workpieces is treated with at least one adhesion promoter (primer), wherein the workpiece is treated with the adhesion promoter simultaneously or prior to treatment with the catalyst, wherein the catalyst is admixed to the adhesion promoter and/or wherein the catalyst is applied to the adhesion promoter layer, and wherein the adhesion promoter is formed on the basis of an aqueous and/or solvent-containing dispersion of a non-reactive adhesive.

2. The method according to claim 1, **characterised in**
**that** the catalyst is applied to the workpiece in the form of a solution or dispersion and/or
**that** the catalyst is deposited on the workpiece by immersion, knife coating, rolling, spray application, nozzle application, spraying, or by means of a felt, particularly by spray application, knife coating, rolling, and/or by means of a felt, and/or
**that** the solution and/or dispersion contains the catalyst in quantities of 0.01 to 10 wt.-%, in particular 0.05 to 8 wt.-%, preferably 0.1 to 5 wt.-%, more preferably 0.15 to 3 wt.-%, particularly preferably 0.2 to 2 wt.-%, even more preferably 0.3 to 1 wt.-%, in with respect to the solution and/or dispersion.

3. The method according to claim 1 or 2, **characterised in that** the adhesion promoter is a wash primer.

4. The method according to one of the preceding claims, **characterised in**
**that** the adhesion promoter has a solids content of from 0.5 to 40 wt.-%, preferably from 1.0 to 30 wt.-%, more preferably from 1.3 to 18 wt.-%, particularly preferably from 1.5 to 15 wt.-% , with respect to the adhesion promoter, and/or
**that** the adhesion promoter is formed on the basis of a dispersion adhesive, in particular wherein the adhesion promoter used is a dispersion adhesive, selected from the group of polyurethane dispersions, acrylate dispersions, chloroprene dispersions, epoxy resin dispersions, ethylene vinyl acetate dispersions (EVA dispersions), and polyvinyl acetate dispersions (PVAc dispersions), and mixtures of two or a plurality of the above-mentioned dispersions, in particular wherein a dispersion adhesive based on a particularly aqueous, polyurethane dispersion is used as the adhesion promoter.

5. The method according to one of the preceding claims, **characterised in**
**that** the adhesion promoter and/or primer is applied to the workpiece by immersion, knife coating, rolling, spray application, nozzle application, spraying, or by means of a felt, particularly by spray application, knife coating, rolling, and/or by means of a felt, and/or
**that** the ratio by mass of catalyst, on the one hand, to the dry weight of the adhesion promoter, on the other hand, is adjusted to the range from 20 : 1 to 1 : 2,000, in particular 10 : 1 to 1 : 1,000, preferably 8 : 1 to 1 : 500, more preferably 5 : 1 to 1 : 200, particularly preferably 3 : 1 to 1 : 100, even more preferably 2 : 1 to 1 : 50, and/or
**that** all workpieces are treated with the catalyst before the joining.

6. The method according to one of the preceding claims, **characterised in that** the method is carried out as film lamination, in particular as a profile wrapping.

7. The method according to one of the preceding claims, **characterised in that** the method is carried out as edgebanding adhesion.

8. A composite workpiece, in particular a plate-shaped workpiece being charged with edgebanding or a film-laminated profile, preferably plastic window profile, being obtainable according to one of the preceding claims.

9. The use of a solution and/or dispersion of a photolatent catalyst and an adhesion promoter for accelerating and/or improving the setting and/or crosslinking of a reactive adhesive, preferably a reactive hot-melt adhesive.

10. A solution and/or dispersion of an adhesion promoter on the basis of a non-reactive adhesive, in particular a non-reactive dispersion adhesive, containing a photolatent catalyst, wherein the photolatent catalyst is selected from metalorganic compounds, in particular titanium-, tin-, bismuth-, mercury- and/or zinc-based organometallic compounds, quaternary ammonium compounds, and aromatic isocyanates, and mixtures thereof, for affecting the setting behaviour and/or the crosslinking of a reactive adhesive, in particular a reactive hot-melt adhesive.

## Revendications

1. Procédé d'assemblage d'au moins deux pièces (pièces à assembler) par collage au moyen d'une colle thermofusible réactive,
au moins une des pièces avant l'application de l'adhésif étant soumise à l'action d'un catalyseur influençant le comportement de prise et/ou la réticulation de l'adhésif et/ou traitée à l'aide de ce dernier et l'adhésif étant ensuite appliqué sur au moins l'une des pièces et les pièces étant ensuite collées ensemble,
un catalyseur photolatent étant utilisé comme catalyseur, le catalyseur pouvant être activable aux UV et le catalyseur photolatent étant sélectionné parmi des composés organo-métalliques à base de zinc et/ou de titane, d'étain, de bismuth, de mercure, des composés d'ammonium quaternaires et des isocyanates aromatiques ainsi que leurs mélanges,
au moins l'une des pièces étant traitées au moins à l'aide d'un promoteur d'adhésion (apprêt), la pièce étant traitée simultanément ou avant le traitement à l'aide du catalyseur par le prompteur d'adhésion, le catalyseur étant mélangé au promoteur d'adhésion et/ou le catalyseur étant appliqué sur la couche de promoteur d'adhésion et le promoteur d'adhésion étant conçu sur la base d'une dispersion aqueuse et/ou contenant un solvant d'un adhésif non réactif.

2. Procédé selon la revendication 1, **caractérisé en ce**
**que** le catalyseur est appliqué sous la forme d'une solution ou une dispersion sur la pièce et/ou
en ce que le catalyseur est appliqué sur la pièce par immersion, raclage, laminage, application par pulvérisation, jet, projection ou au moyen d'un feutre, en particulier par application par pulvérisation, raclage, laminage et/ou au moyen d'un feutre, sur la pièce et/ou
en ce que la solution et/ou la dispersion contient le catalyseur en quantités comprises entre 0,01 et 10 % en poids, en particulier entre 0,05 et 8 % en poids, de préférence entre 0,1 er 5 % en poids, de préférence encore entre 0,15 et 3 % en poids, mieux encore entre 0,2 et 2 % en poids, idéalement entre 0,3 et 1 % en poids, rapporté à la solution et/ou à la dispersion.

3. Procédé selon la revendication 1 ou 2, **caractérisé en ce que** le promoteur d'adhésion est un apprêt réactif.

4. Procédé selon une des revendications précédentes, **caractérisé en ce**
**que** le promoteur d'adhésion présente une teneur en matière solide comprise entre 0,5 et 40 % en poids, de préférence entre 1,0 et 30 % en poids, de préférence entre 1,3 et 18 % en poids, de préférence encore entre 1,5 et 15 % en poids, rapporté au promoteur d'adhésion et/ou
en ce que le promoteur d'adhésion est conçu sur la base d'un adhésif en dispersion, en particulier comme promoteur d'adhésion étant utilisé un adhésif en dispersion, sélectionné dans le groupe des dispersions de polyuréthane, des dispersions d'acrylate, des dispersions de chloroprène, des dispersions de résine époxyde, des dispersions d'éthylène acétate de vinyle (dispersions EVA) et dispersions de polyacétate de vinyle (dispersions PVAc) ainsi que les mélanges d'au moins deux des dispersions susmentionnées, en particulier comme promoteur d'adhésion étant utilisé un adhésif en dispersion à base d'une dispersion de polyuréthane en particulier aqueuse.

5. Procédé selon une des revendications précédentes, **caractérisé en ce**
**que** le promoteur d'adhésion et/ou l'apprêt est appliqué sur la pièce par immersion, raclage, laminage, application par pulvérisation, jet, projection ou au moyen d'un feutre, en particulier par application par pulvérisation, raclage, laminage et/ou au moyen d'un feutre sur la pièce et/ou
en ce que le rapport massique du catalyseur d'une part par rapport au poids sec du promoteur d'adhésion d'autre part est ajusté dans la plage de 20: 1 à 1: 2 000, en particulier 10: 1 à 1: 1 000, de préférence 8: 1 à 1: 500, de préférence 5: 1 à 1: 200, de préférence encore 3: 1 à 1: 100, idéalement 2: 1 à 1: 50 et/ou
en ce que toutes les pièces sont traitées à l'aide du catalyseur avant l'assemblage.

6. Procédé selon l'une des revendications précédentes, **caractérisé en ce que** le procédé est exécuté comme contrecollage de feuilles, en particulier comme enrobage de profilé.

7. Procédé selon l'une des revendications précédentes, **caractérisé en ce que** le procédé est exécuté en tant que collage de couvre champ.

8. Pièce composite, en particulier pièce en forme de plaque recevant un couvre-champ ou profilé contrecollé d'une feuille, de préférence profilé de fenêtre en plastique, obtenue selon l'une des revendications précédentes.

9. Utilisation d'une solution et/ou d'une dispersion d'un catalyseur photolatent et d'un promoteur d'adhésion pour accélérer et/ou améliorer la prise et/ou la réticulation d'un adhésif réactif, de préférence d'une colle thermofusible réactive.

10. Solution et/ou dispersion d'un promoteur d'adhésion à base d'un adhésif non réactif, en particulier d'un adhésif en dispersion non réactif, contenant un catalyseur photolatent, le catalyseur photolatent étant sélectionné dans des composés organo-métalliques, en particulier des composés organo-métalliques à base de zinc et/ou de titane, d'étain, de bismuth, de mercure, des composés d'ammonium quaternaires et des isocyanates aromatiques ainsi que leurs mélanges, afin d'influencer le comportement de prise et/ou la réticulation d'un adhésif réactif, en particulier d'une colle thermofusible réactive.
